(19) Europäisches Patentamt
European Patent Office
Office européen des brevets

(11) Veröffentlichungsnummer: **0 439 423 B1**

(12) **EUROPÄISCHE PATENTSCHRIFT**

(45) Veröffentlichungstag der Patentschrift: **31.05.95**

(51) Int. Cl.$^{6}$: **C09B 43/00**, C09B 31/10, C09B 35/04, D06P 3/24

(21) Anmeldenummer: **91810025.6**

(22) Anmeldetag: **15.01.91**

(54) **Azofarbstoffe, Verfahren zu deren Herstellung und deren Verwendung.**

(30) Priorität: **24.01.90 CH 227/90**

(43) Veröffentlichungstag der Anmeldung:
**31.07.91 Patentblatt 91/31**

(45) Bekanntmachung des Hinweises auf die Patenterteilung:
**31.05.95 Patentblatt 95/22**

(84) Benannte Vertragsstaaten:
**BE CH DE ES FR GB IT LI NL**

(56) Entgegenhaltungen:
**FR-A- 2 030 380**
**GB-A- 2 024 265**

(73) Patentinhaber: **CIBA-GEIGY AG**
**Klybeckstrasse 141**
**CH-4002 Basel (CH)**

(72) Erfinder: **Schaetzer, Jürgen, Dr.**
**Am Schildgraben 5**
**W-7888 Rheinfelden (DE)**
Erfinder: **Adam, Jean-Marie, Dr.**
**Rue de Village Neuf 60 D**
**F-68300 Rosenau (FR)**

EP 0 439 423 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Aus der FR-A-20 30 380, Beispiel 1 kennt man bereits einen Farbstoff der Formel

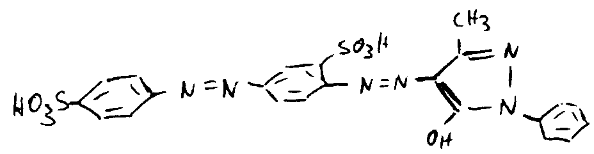

Gegenstand der vorliegenden Erfindung sind Azofarbstoffe der Formel

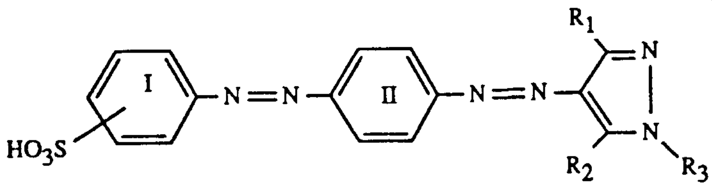

(1),

worin $R_1$ Wasserstoff oder $C_1$-$C_4$-Alkyl, $R_2$ $C_2$-$C_4$-Alkyl, $R_3$ Wasserstoff, $C_1$-$C_4$-Alkyl oder gegebenenfalls substituiertes $C_5$-$C_7$-Cycloalkyl oder Phenyl sind und die Benzringe I und II gegebenenfalls substituiert sind.

Die Azofarbstoffe der Formel (1), worin $R_1$ und $R_2$ voneinander verschiedene Bedeutungen haben und zusätzlich $R_3$ nicht Wasserstoff bedeutet, liegen in der Regel als Isomerengemisch der Verbindungen der Fomeln

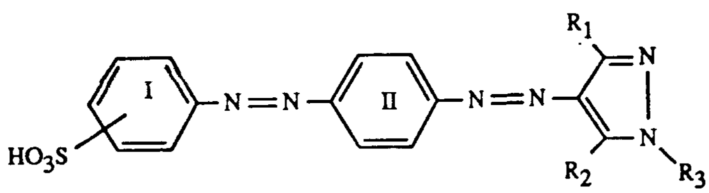

(1) und

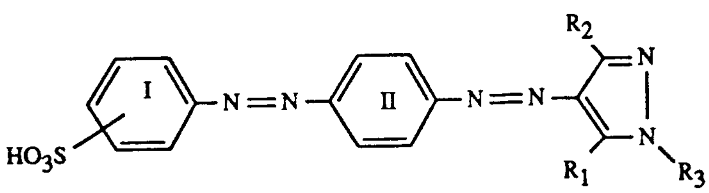

(2)

vor. Unter der Bezeichnung Azofarbstoffe der Formel (1) werden hier und im folgenden auch die oben angegebenen Isomerengemische verstanden.

Als $C_1$-$C_4$-Alkyl kommt für $R_1$ und $R_3$ in Formel (1) unabhängig voneinander Methyl, Aethyl, Propyl, Isopropyl, Butyl, Isobutyl, sek.-Butyl oder tert.-Butyl in Betracht.

Als $C_2$-$C_4$-Alkyl kommt für $R_2$ in Formel (1) Aethyl, Propyl, Isopropyl, Butyl, Isobutyl, sek.-Butyl oder tert.-Butyl in Betracht.

Als $C_5$-$C_7$-Cycloalkyl kommt für $R_3$ in Formel (1) z.B. unsubstituiertes Cyclohexyl oder durch $C_1$-$C_4$-Alkyl, wie z.B. Methyl oder Aethyl, substituiertes Cyclohexyl in Betracht.

Als Phenyl kommt für $R_3$ in Formel (1) z.B. unsubstituiertes Phenyl oder durch $C_1$-$C_4$-Alkyl, wie z.B. Methyl oder Aethyl, $C_1$-$C_4$-Alkoxy, wie z.B. Methoxy oder Aethoxy, $C_2$-$C_4$-Alkanoylamino, wie z.B. Acetylamino oder Propionylamino, Hydroxy, Sulfo, Cyan oder Halogen, wie z.B. Fluor, Chlor oder Brom, substituiertes Phenyl in Betracht.

Als Substituenten der Benzringe I und II kommen unabhängig voneinander z.B. $C_1$-$C_4$-Alkyl, wie z.B. Methyl oder Aethyl, $C_1$-$C_4$-Alkoxy, wie z.B. Methoxy oder Aethoxy, $C_2$-$C_4$-Alkanoylamino, wie z.B. Acetylamino oder Propionylamino, Hydroxy, Sulfo, Cyan, Nitro, Sulfonamido oder Halogen, wie z.B. Fluor, Chlor oder Brom, in Betracht. Bevorzugte Substituenten der Benzringe I und II sind $C_1$-$C_4$-Alkyl, $C_1$-$C_4$-Alkoxy, $C_2$-$C_4$-Alkanoylamino und Halogen, insbesondere Methyl, Methoxy und Chlor, vorzugsweise Methoxy.

Bevorzugt sind Azofarbstoffe der Formel (1), worin der Benzring I nur durch eine Sulfogruppe substituiert ist.

Ebenfalls bevorzugt sind Azofarbstoffe der Formel (1), worin $R_1$ $C_1$-$C_4$-Alkyl, insbesondere Methyl oder Aethyl, ist.

Weiterhin bevorzugt sind Azofarbstoffe der Formel (1), worin $R_2$ Aethyl ist.

Ferner sind Azofarbstoffe der Formel (1) bevorzugt, worin $R_3$ Wasserstoff ist.

Bevorzugt sind ebenfalls Azofarbstoffe der Formel (1), worin die Sulfogruppe an den Benzring I in meta- oder para-Stellung zur Azogruppe gebunden ist.

Besonders bevorzugt sind Azofarbstoffe der Formel (I), worin $R_1$ Methyl oder Aethyl und $R_2$ Aethyl ist, insbesondere worin $R_1$ Methyl oder Aethyl und $R_2$ Aethyl ist und die Sulfogruppe an den Benzring I in meta- oder para-Stellung zur Azogruppe gebunden ist.

Ganz besonders bevorzugt sind Azofarbstoffe der Formel (1), worin $R_1$ Methyl oder Aethyl, $R_2$ Aethyl und $R_3$ Wasserstoff ist, insbesondere worin $R_1$ Methyl oder Aethyl, $R_2$ Aethyl und $R_3$ Wasserstoff ist und die Sulfogruppe an den Benzring I in meta- oder para-Stellung zur Azogruppe gebunden ist.

Ganz besonders wichtig sind Azofarbstoffe der Formel

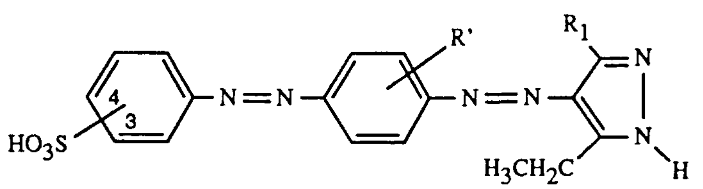

(3),

worin $R_1$ Methyl oder Aethyl und R' Wasserstoff oder Methoxy bedeutet und die Sulfogruppe in der bezeichneten 3- oder 4-Position an den Benzring gebunden ist.

Von besonderem Interesse sind die Azofarbstoffe der Formeln

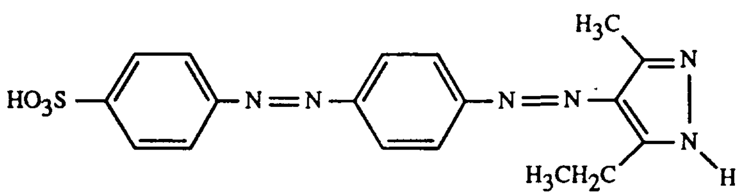

(4),

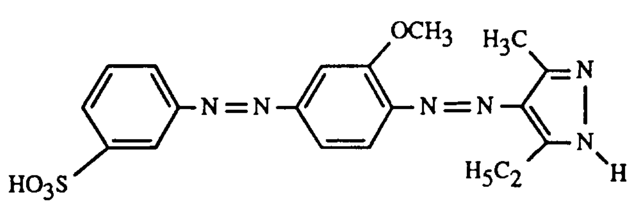

(5) und

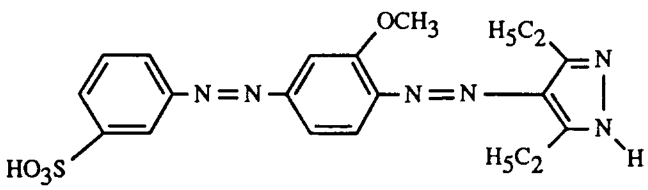

(6),

insbesondere die Farbstoffe der Formeln (5) und (6).

Gegenstand der Erfindung ist ferner ein Verfahren zur Herstellung der Azofarbstoffe der Formel (I), welches dadurch gekennzeichnet ist, dass man ein Amin der Formel

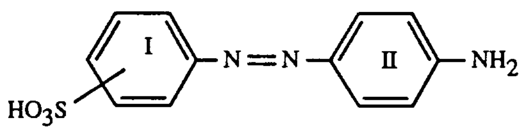

(7)

diazotiert und auf eine Kupplungskomponente der Formel

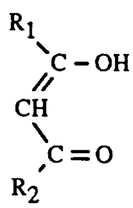

(8)

kuppelt und das Reaktionsprodukt der Formel

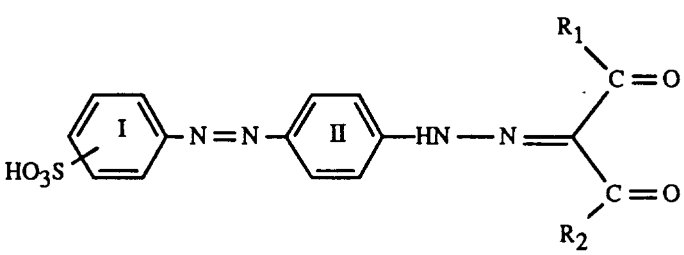

(9)

mit einem Hydrazin der Formel

$H_2N\text{-}NH\text{-}R_3$ (10)

umsetzt, wobei $R_1$, $R_2$ und $R_3$ die in unter Formel (1) angegebenen Bedeutungen haben und die Benzringe I und II gegebenenfalls substituiert sind.

Die Diazotierung des Amins der Formel (7) erfolgt in der Regel durch Einwirken salpetriger Säure in wässrig-mineralsaurer Lösung bei tiefer Temperatur, die Kupplung auf die Kupplungskomponente der Formel (8) bei sauren, neutralen bis schwach alkalischen pH-Werten, insbesondere bei einem pH-Wert von 2 bis 6.

Die Umsetzung der Verbindung der Formel (9) mit einem Hydrazin der Formel (10) erfolgt in Wasser, einem organischen Lösungsmittel, wie z.B. Methanol, Aethanol, Pyridin oder Eisessig oder einer Mischung von Wasser und einem organischen Lösungsmittel, wie z.B. Wasser/Eisessig, bei einer Temperatur von 40 bis 100 °C, insbesondere bei einer Temperatur von 40 bis 60 °C.

Die Amine der Formel (7), die Kupplungskomponenten der Formel (8) und die Hydrazine der Formel (10) sind an sich bekannt oder können in Analogie zu bekannten Verbindungen hergestellt werden.

Als Beispiele für Amine der Formel (7) seien 4-Amino-azobenzol-2'-, -3'- oder -4'-sulfonsäure genannt.

Als Beispiele für Kupplungskomponenten der Formel (8) seien 2,4-Hexandion, 3,5-Heptandion, 2,4-Heptandion, 3,5-Oktandion und 4,6-Oktandion genannt.

Als Beispiele für Verbindungen der Formel (10) seien Hydrazin, Methyl-, Aethyl-, Propyl-, Isopropyl-, Butyl-, Isobutyl-, sek.-Butyl-, tert.-Butyl- oder Cyclohexylhydrazin genannt.

Bevorzugte Ausführungsformen des erfindungsgsmässen Verfahrens sind dadurch gekennzeichnet, dass man

- ein Amin der Formel (7) verwendet, worin der Benzring I nur durch eine Sulfogruppe substituiert ist;
- ein Amin der Formel (7) verwendet, worin die Sulfogruppe an den Benzring I in meta- oder para-Stellung zur Azogruppe gebunden ist;
- eine Kupplungskomponente der Formel (8) verwendet, worin $R_1$ Methyl oder Aethyl ist;
- eine Kupplungskomponente der Formel (8) verwendet, worin $R_2$ Aethyl ist;
- eine Verbindung der Formel (10) verwendet, worin $R_3$ Wasserstoff ist.

Besonders bevorzugt für das erfindungsgemässe Verfahren sind Kupplungskomponenten der Formel (8), worin $R_1$ Methyl oder Aethyl und $R_2$ Aethyl ist. Vorzugsweise diazotiert man ein Amin der Formel (7), worin die Sulfogruppe an den Benzring I in meta- oder para-Stellung zur Azogruppe gebunden ist, und kuppelt dieses auf eine Kupplungskomponente der Formel (8), worin $R_1$ Methyl oder Aethyl und $R_2$ Aethyl ist.

Eine ganz besonders bevorzugte Ausführungsform des erfindungsgemässen Verfahrens zur Herstellung der Azofarbstoffe der Formel (1) ist dadurch gekennzeichnet, dass man ein Amin der Formel (7), worin die Sulfogruppe an den Benzring I in meta- oder para-Stellung zur Azogruppe gebunden ist, diazotiert und auf eine Kupplungskomponente der Formel (8), worin $R_1$ Methyl oder Aethyl und $R_2$ Aethyl ist, kuppelt und das Reaktionsprodukt mit einer Verbindung der Formel (10), worin $R_3$ Wasserstoff ist, umsetzt.

Eine ganz besonders wichtige Ausführungsform des erfindungsgemässen Verfahrens zur Herstellung der Azofarbstoffe der Formel (1) ist dadurch gekennzeichnet, dass man ein Amin der Formel

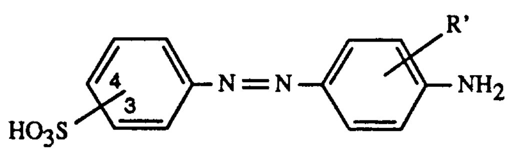

(11),

worin R' Wasserstoff oder Methoxy bedeutet und die Sulfogruppe in 3- oder 4-Position an den Benzring gebunden ist, diazotiert und auf eine Kupplungskomponente der Formel

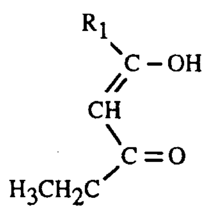

(12)

worin $R_1$ Methyl oder Aethyl ist, kuppelt und das Reaktionsprodukt mit einer Verbindung der Formel

$H_2N-NH_2$ (13)

umsetzt.

Gegenstand der Erfindung ist ferner ein Verfahren zum Trichromie-Färben oder -Bedrucken von natürlichen und synthetischen Polyamidmaterialien mit einer Farbstoffmischung, die mindestens einen gelb- oder orangefärbenden Farbstoff der Formel (1) zusammen mit mindestens einem rotfärbenden Farbstoff und mindestens einem blaufärbenden Farbstoff enthält, wobei für den Farbstoff der Formel (1) die zuvor angegebenen Bevorzugungen gelten; insbesondere verwendet man als gelb- oder orangefärbenden Farbstoff einen Farbstoff der Formel (3).

Bevorzugt verwendet man in dem erfindungsgemässen Verfahren zum Trichromie-Färben oder -Bedrücken mindestens einen Farbstoff der Formel (1) zusammen mit mindestens einem der rotfärbenden Farbstoffe der Formeln (14), (15) und (16):

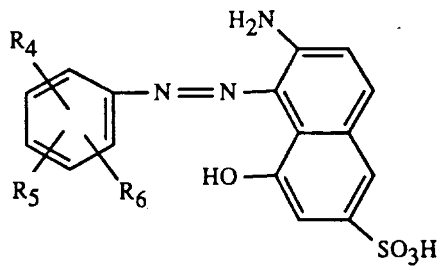

(14),

worin $R_4$ gegebenenfalls substituiertes $C_1$-$C_8$-Alkyl, Halogen, gegebenenfalls im Phenylring durch $C_1$-$C_4$-Alkyl substituiertes Phenylsulfonyl oder Phenoxysulfonyl, Cyclohexyloxycarbonylamino, $C_2$-$C_4$-Alkanoylamino, gegebenenfalls im Phenylring durch Halogen substituiertes Benzoylamino, 1-Azacycloheptan-N-sulfonyl oder

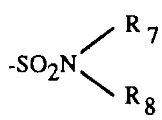

ist, wobei

$R_7$ $C_1$-$C_8$-Alkyl oder gegebenenfalls durch $C_1$-$C_4$-Alkyl substituiertes Phenyl oder Cyclohexyl und $R_8$ Wasserstoff oder $C_1$-$C_8$-Alkyl ist, $R_5$ Wasserstoff, Halogen, $C_1$-$C_8$-Alkyl oder $C_2$-$C_4$-Alkanoylamino und $R_6$ Wasserstoff oder Halogen ist,

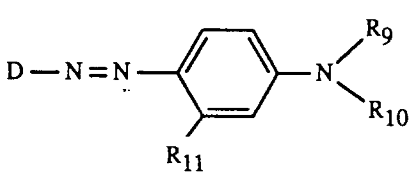

(15),

worin D gegebenenfalls substituiertes Phenyl, Thiophenyl oder Benzthiazolyl, $R_9$ $C_1$-$C_8$-Alkyl, $R_{10}$ gegebenenfalls substituiertes $C_1$-$C_8$-Alkyl und $R_{11}$ Wasserstoff oder $C_1$-$C_4$-Alkyl ist, und

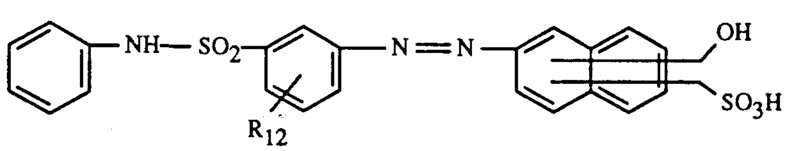

(16),

worin $R_{12}$ $C_1$-$C_4$-Alkyl ist, zusammen mit mindestens einem blaufärbenden Farbstoff der Formel

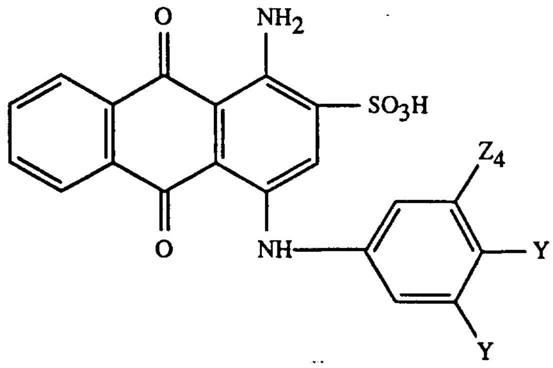

(17),

worin ein Y Wasserstoff oder Methyl und das andere Y $C_{2-4}$-Alkanoylamino oder $C_2$-$C_4$-Hydroxyalkylsulphamoyl bedeutet und $Z_4$ Wasserstoff oder Methyl ist, wobei für den Farbstoff der Formel (1) die zuvor angegebenen Bevorzugungen gelten; insbesondere verwendet man als gelb- oder orangefärbenden Farbstoff einen Farbstoff der Formel (3).

Die in dem erfindungsgemässen Verfahren zum Trichromie-Färben oder -Bedrucken verwendeten Farbstoffe der Formeln (14), (15), (16) und (17) sind an sich bekannt oder können in Analogie zu bekannten Farbstoffen hergestellt werden.

Als $C_1$-$C_8$-Alkyl kommen für $R_4$, $R_5$, $R_7$ und $R_8$ in der Formel (14) und für $R_9$ und $R_{10}$ in Formel (15) unabhängig voneinander z. B. Methyl, Äthyl, Propyl, Isopropyl, Butyl, sek.-Butyl, tert.-Butyl, Isobutyl, Pentyl, Hexyl, Heptyl und Octyl in Betracht. Vorzugsweise sind $R_4$, $R_5$, $R_7$, $R_8$, $R_9$ und $R_{10}$ $C_1$-$C_4$-Alkyl.

Der Rest $R_4$ in Formel (14) als $C_1$-$C_8$-Alkyl kann substituiert sein z.B. durch Halogen, wie z.B. Chlor oder Brom und insbesondere Fluor. Als Beispiel sei der Trifluormethylrest genannt.

Der Rest $R_{10}$ in Formel (15) als $C_1$-$C_8$-Alkyl kann substituiert sein z.B. durch Sulfo, Sulfato oder Phenyl. Als Beispiele seien Benzyl, $\beta$-Sulfoäthyl, $\gamma$-Sulfopropyl und $\beta$-Sulfatoäthyl genannt.

Als Halogen kommen für $R_4$, $R_5$ und $R_6$ in Formel (14) unabhängig voneinander z.B. Fluor, Brom oder insbesondere Chlor in Betracht.

Der Rest $R_4$ in Formel (14) als Benzoylamino kann im Phenylring durch Halogen, wie z.B. Fluor, Brom oder insbesondere Chlor, substituiert sein.

Der Rest $R_7$ als Phenyl oder Cyclohexyl sowie der Rest $R_4$ als Phenylsulfonyl oder Phenoxysulfonyl kann durch $C_1$-$C_4$-Alkyl, wie z. B. Methyl, Äthyl, Propyl, Isopropyl, Butyl, sek.-Butyl, tert.-Butyl oder Isobutyl, insbesondere Methyl, substituiert sein.

Als $C_1$-$C_4$-Alkyl kommen für $R_{11}$ in Formel (15) und für $R_{12}$ in Formel (16) unabhängig voneinander z. B. Methyl, Äthyl, Propyl, Isopropyl, Butyl, sek.-Butyl, tert.-Butyl oder Isobutyl, insbesondere Methyl, in Betracht.

Als $C_2$-$C_4$-Alkanoylamino kommen für $R_4$ und $R_5$ in Formel (14) und für Y in Formel (17) unabhängig voneinander z.B. Acetylamino, Propionylamino oder Butyrylamino in Betracht.

Der Rest D in Formel (15) kann z.B. durch Halogen, wie Fluor, Chlor oder Brom, $C_1$-$C_4$-Alkyl, wie Methyl, Äthyl, Propyl, Isopropyl, Butyl, sek.-Butyl, tert.-Butyl oder Isobutyl, $C_1$-$C_4$-Alkoxy, wie z.B. Methoxy, Äthoxy, Propoxy oder Butoxy, $C_1$-$C_4$-Alkoxycarbonyl, wie z.B. Methoxycarbonyl oder Aethoxycarbonyl, Sulfo oder gegebenenfalls im Alkylteil durch Sulfo substituiertes $C_1$-$C_4$-Alkylaminosulfonyl, wie z.B. Methylaminosulfonyl, Aethylaminosulfonyl oder $\beta$-Sulfoäthylaminosulfonyl, substituiert sein.

Als $C_{2-4}$-Hydroxylalkylsulphamoylrest kommt für Y in Formel (17) beispielsweise der $\beta$-Hydroxyäthylsulphamoyl-, $\beta$-Hydroxypropylsulphamoyl-, $\gamma$-Hydroxypropylsulphamoyl- oder der $\beta$-Hydroxybutylsulphamoylrest in Betracht.

Bevorzugt verwendet man für das erfindungsgemässe Verfahren zum Trichromie-Färben oder -Bedrükken mindestens einen der rotfärbenden Farbstoffe der Formeln (14), (15) und (16), wobei im Farbstoff der Formel (14) $R_4$ Trifluoromethyl, Chlor, Acetylamino, $-SO_2N(n\text{-}C_4H_9)_2$, Phenoxysulfonyl, Phenylsulfonyl, 1-Azacycloheptan-N-sulfonyl, Cyclohexyloxycarbonylamino, gegebenenfalls im Phenylring durch Chlor substituiertes Benzoylamino oder gegebenenfalls im Phenylring durch Methyl substituiertes Phenylaminosulfonyl, Cyclohexylaminosulfonyl, N-($C_1$-$C_2$-Alkyl)phenyl- oder N-($C_1$-$C_2$-Alkyl)cyclohexyl-aminosulfonyl, $R_5$ Wasserstoff, Methyl, Chlor oder Acetylamino und $R_6$ Wasserstoff oder Chlor ist, und im Farbstoff der Formel (15) D durch Chlor, Sulfo, Methylaminosulfonyl, Aethylaminosulfonyl oder $\beta$-Sulfoäthylaminosulfonyl substituiertes

Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_9$ Aethyl, $R_{10}$ Aethyl, $\beta$-Sulfatoäthyl,

$$-(CH_2)_{2\text{-}3}SO_3H$$

oder Benzyl und $R_{11}$ Wasserstoff oder Methyl ist, und im Farbstoff der Formel (16) $R_{12}$ Methyl ist.

Besonders bevorzugt verwendet man mindestens einen der rotfärbenden Farbstoffe der Formeln

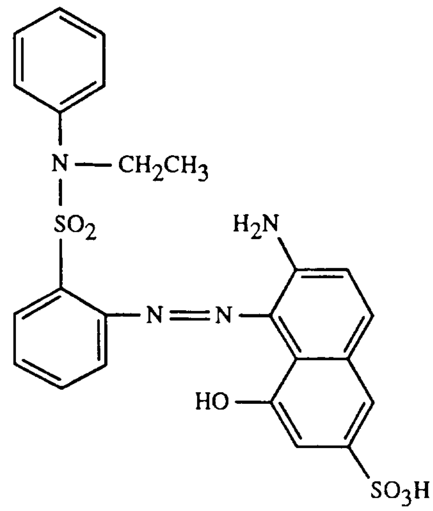

(18),

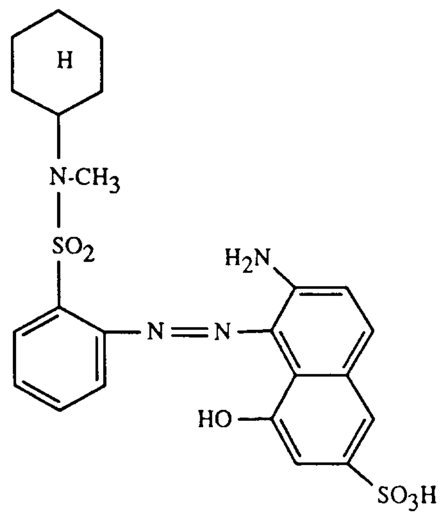

(19) und

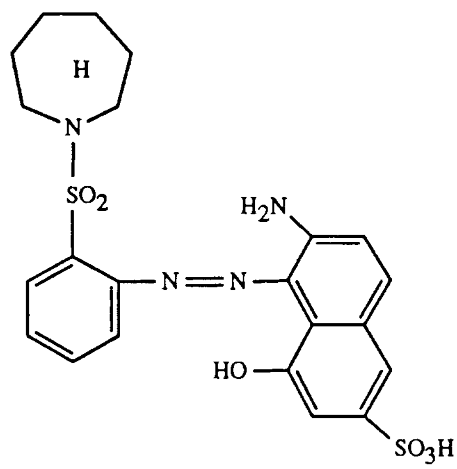

(20).

Ebenfalls besonders bevorzugt verwendet man für das erfindungsgemässe Verfahren mindestens einen der blaufärbenden Farbstoffe der Formeln

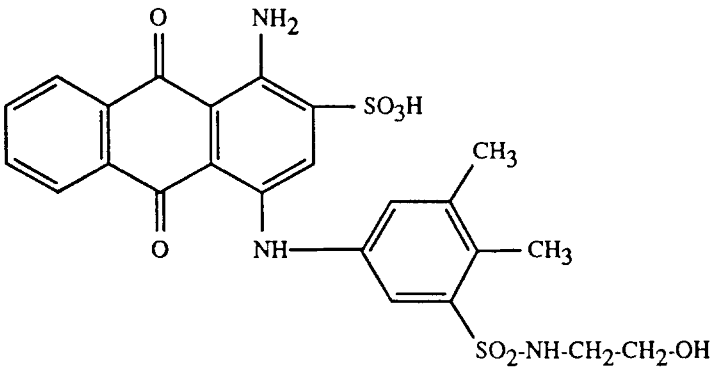

(21),

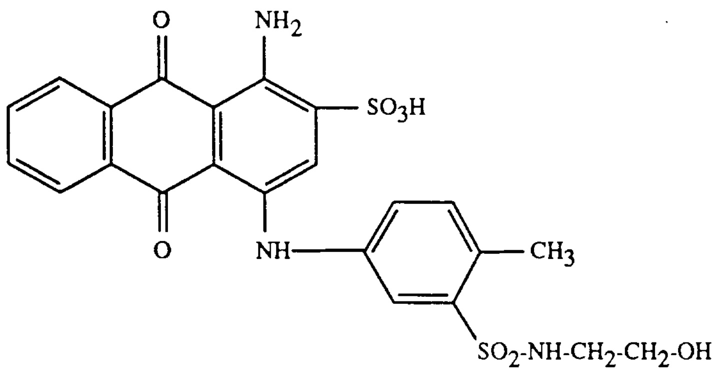

(22),

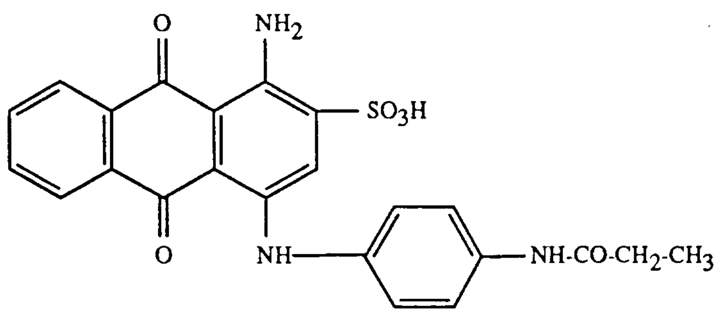

(23),

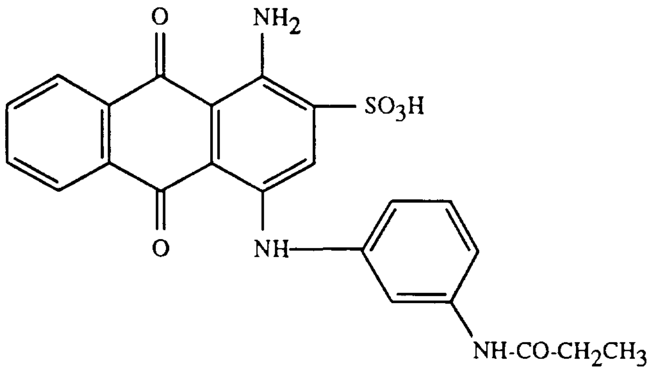

(24) und

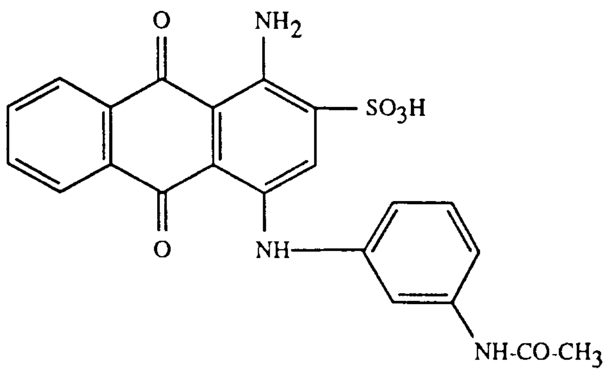

(25).

Verwendet man für das erfindungsgemässe Verfahren Mischungen blaufärbender Farbstoffe, so ist die Mischung der blaufärbenden Farbstoffe der Formeln (21) oder (22) mit einem Farbstoff der Formel (23), (24) oder (25) bevorzugt. Ganz besonders bevorzugt ist die Mischung der blaufärbenden Farbstoffe der Formeln

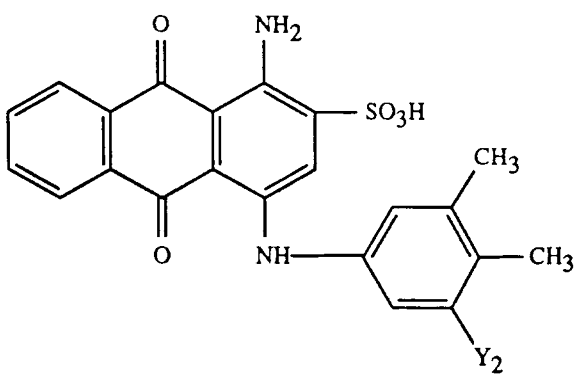

(26),

worin $Y_2$ ein $C_{2-4}$-Hydroxyalkylsulphamoylrest ist, und

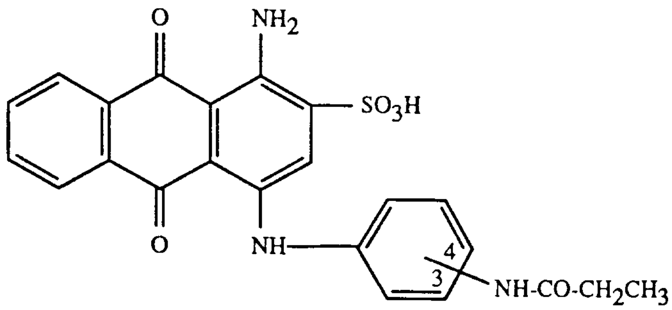

(27),

worin der Rest $-NH-CO-CH_2CH_3$ in 3- oder 4-Stellung gebunden ist.

Ganz besonders bevorzugt verwendet man für das erfindungsgemässe Verfahren zum Trichromie-Färben oder -Bedrucken mindestens einen Farbstoff der Formel (1) zusammen mit mindestens einem der rotfärbenden Farbstoffe der Formeln (18), (19) und (20), insbesondere (18) und (19), und mindestens einem der blaufärbenden Farbstoffe der Formeln (21), (22), (23), (24) und (25), wobei für den Farbstoff der Formel (1) die zuvor angegebenen Bevorzugungen gelten; insbesondere verwendet man als gelb- oder orangefarbenden Farbstoff einen Farbstoff der Formel (3).

Eine ganz besonders wichtige Ausführungsform des erfindungsgemässen Verfahrens zum Trichromie-Färben oder -Bedrucken ist dadurch gekannzeichnet, dass man mindestens einen Farbstoff der Formel (1) zusammen mit einem rotfärbenden Farbstoff der Formel (19) und einem blaufärbenden Farbstoff der Formel (21) verwendet, wobei für den Farbstoff der Formel (1) die zuvor angegebenen Bevorzugungen gelten; insbesondere verwendet man als gelb- oder orangefärbenden Farbstoff einen Farbstoff der Formel (3).

Werden in dem erfindungsgemässen Verfahren Farbstoffmischungen verwendet, so können diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe durch Zerstäubungstrocknen der wässrigen Farbstoffmischungen hergestellt werden.

Die erfindungsgemässen Farbstoffe der Formel (1) sowie die in dem erfindungsgemässen Verfahren zum Trichromie-Färben oder -Bedrücken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffe der Formel (1) sowie die in dem erfindungsgemässen Verfahren verwendeten Farbstoffe enthalten in der Regel weitere Zusätze wie z.B. Kochsalz oder Dextrin.

Das erfindungsgemässe Verfahren zum Trichromie-Färben oder -Bedrücken kann auf die üblichen Färbe- bzw. Druckverfahren angewendet werden.- Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstoffe der Formel (1) sowie das erfindungsgemässe Verfahren zum Trichromie-Färben oder -Bedrücken sind besonders zum Färben aus Kurzflotten, wie z.B. bei Kontinuefärbeverfahren oder diskontinuierlichen und kontinuierlichen Schaumfärbeverfahren, geeignet.

Die erfindungsgemässen Farbstoffe der Formel (1) sowie die in dem erfindungsgemässen Verfahren verwendeten Farbstoffe zeichnen sich beim Trichromie-Färben oder -Bedrucken durch gleichmässigen Farbaufbau, gutes Aufziehverhalten, guten Nuancenkonstanz auch in verschiedenen Konzentrationen, gute Echtheiten sowie insbesondere durch sehr gute Kombinierbarkeit aus.

Die erfindungsgemässen Farbstoffe der Formel (1) sowie das erfindungsgemässe Verfahren zum Trichromie-Färben oder -Bedrücken eignen sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und sind geeignet zum Färben oder Bedrücken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

Die erfindungsgemässen Azofarbstoffe der Formel (1) ergeben egale Färbungen mit guten Allgemeinechtheiten, insbesondere guter Reib-, Nass-, Nassreib- und Lichtechtheit. Ferner sind die erfindungsgemässen Farbstoffe gut wasserlöslich und hartwasserbeständig.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Eine neutrale, 70 bis 80° heisse Lösung von 28 Teilen 4-Amino-azobenzol-4'-sulfonsäure in 500 Teilen Wasser lässt man gleichzeitig mit 26 Teilen einer wässrigen Natriumnitritlösung (4N) in die Mischung von 28 Teilen konzentrierter Salzsäure in 200 Teilen Wasser einlaufen und hält die Temperatur der Reaktionsmischung durch Zugabe von Eis bei 20 bis 25°. Nach beendeter Zugabe wird noch 2 Stunden nachgeruhrt und der Nitritüberschuss mit wenig Amidosulfonsäure zerstört. Das so bereitete Diazotierungsgemisch lässt man langsam in eine 0 bis 5° kalte Lösung von 14 Teilen 2,4-Hexandion und 180 Teilen Natriumacetat in 500 Teilen Wasser einfliessen. Nach mehrstündigem Rühren bei 0 bis 5° wird zur Vervollständigung der Reaktion auf 30° erwärmt und mit Natriumacetat der pH auf einen Wert von 5,5 gestellt. Anschliessend wird der Niederschlag abgesaugt und bei 60° getrocknet Man erhält 30 Teile eines orangefarbenen Pulvers.

8 Teile des nach obigen Angaben hergestellten Reaktionsproduktes werden in 50 Teilen Eisessig und 20 Teilen Wasser bei Raumtemperatur suspendiert. Unter Rühren werden auf einmal 1,5 Teile Hydrazinhydrat zugefügt. Das Reaktionsgemisch wird langsam auf 100° erhitzt und so lange gerührt, bis dünnschichtchromatographisch kein Edukt mehr nachweisbar ist. Nach Abkühlung auf Raumtemperatur wird der Farbstoff durch Zusatz von Salzsäure (2N) ausgefällt. Nach Filtration, Nachwaschen mit wenig Wasser und Trocknung bei einer Temperatur von 80° erhält man 7 Teile eines Farbstoffs, der in Form der freien Säure der Verbindung der Formel

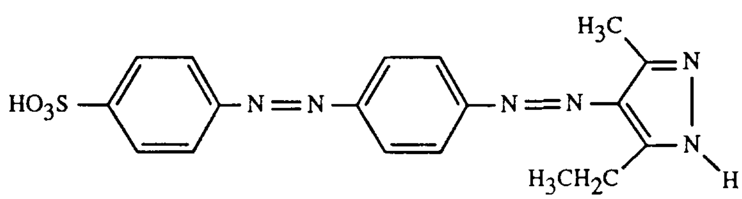

(101)

entspricht.

Beispiele 2 bis 113: Verfährt man wie in Beispiel 1 angegeben, verwendet jedoch anstelle von 28 Teilen 4-Amino-azobenzol-4'-sulfonsäure eine äquimolare Menge einer Verbindung der Formel

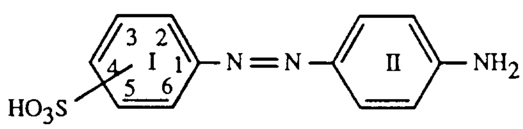

(7),

worin die Sulfogruppe in der in Tabelle 1 in Spalte 2 angegebenen Position an den Benzring I gebunden ist und die Benzringe I und II keine weiteren Substituenten enthalten, und anstelle von 14 Teilen 2,4-Hexandion eine äquimolare Menge einer Verbindung der Formel

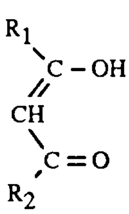

(8),

worin $R_1$ und $R_2$ die in Tabelle 1 in den Spalten 3 und 4 angegebenen Bedeutungen haben, sowie anstelle von 1,5 Teilen Hydrazinhydrat eine äquimolare Menge einer Verbindung der Formel

$H_2N\text{-}NH\text{-}R_3$ (10),

worin $R_3$ die in Tabelle 1 in Spalte 5 angegebenen Bedeutungen hat, so erhält man analoge Farbstoffe, die synthetische und natürliche Polyamidmaterialien in gelben Farbtönen färben. Verwendet man in den Beispielen der folgenden Tabelle 1 eine Verbindung der Formel (8), worin $R_1$ und $R_2$ voneinander verschiedene Bedeutungen haben, zusammen mit einer Verbindung der Formel (10), worin $R_3$ nicht Wasserstoff bedeutet, so erhält man Isomerengemische der Verbindungen der Formeln

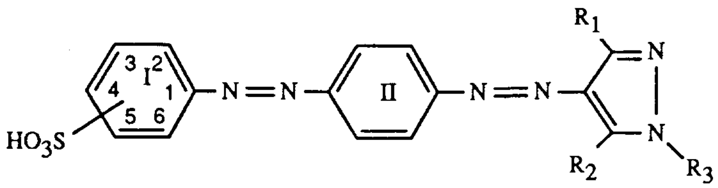

(1) und

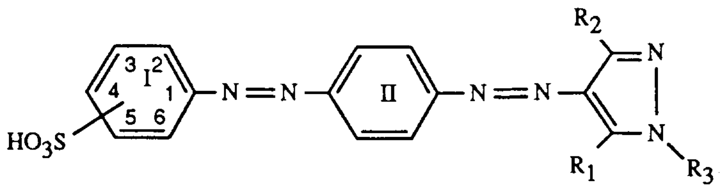

(2),

worin $R_1$, $R_2$ und $R_3$ die in Tabelle 1 in den Spalten 3 bis 5 angegebenen Bedeutungen haben und die Sulfogruppe in der in Tabelle 1 in Spalte 2 angegebenen Position an den Benzring I gebunden ist und die Benzringe I und II keine weiteren Substituenten enthalten, die synthetische und natürliche Polyamidmaterialien in gelben Farbtönen färben.

Tabelle 1

| Bsp. | Substituent des Benzringes I | $R_1$ | $R_2$ | $R_3$ |
|---|---|---|---|---|
| 2 | 4-$SO_3H$ | -$CH_3$ | -$C_2H_5$ | -$CH_3$ |
| 3 | 4-$SO_3H$ | -$CH_3$ | -$C_2H_5$ | -$C_2H_5$ |
| 4 | 4-$SO_3H$ | -$CH_3$ | -$C_2H_5$ | -n-$C_3H_7$ |
| 5 | 4-$SO_3H$ | -$CH_3$ | -$C_2H_5$ | -iso-$C_3H_7$ |
| 6 | 4-$SO_3H$ | -$CH_3$ | -$C_2H_5$ | -n-$C_4H_9$ |
| 7 | 4-$SO_3H$ | -$CH_3$ | -$C_2H_5$ | -sec-$C_4H_9$ |
| 8 | 4-$SO_3H$ | -$CH_3$ | -$C_2H_5$ | -tert-$C_4H_9$ |
| 9 | 4-$SO_3H$ | -$CH_3$ | -$C_2H_5$ | -cyclo-$C_6H_{11}$ |
| 10 | 3-$SO_3H$ | -$CH_3$ | -$C_2H_5$ | -H |
| 11 | 3-$SO_3H$ | -$CH_3$ | -$C_2H_5$ | -$CH_3$ |
| 12 | 3-$SO_3H$ | -$CH_3$ | -$C_2H_5$ | -$C_2H_5$ |
| 13 | 3-$SO_3H$ | -$CH_3$ | -$C_2H_5$ | -n-$C_3H_7$ |
| 14 | 3-$SO_3H$ | -$CH_3$ | -$C_2H_5$ | -iso-$C_3H_7$ |
| 15 | 3-$SO_3H$ | -$CH_3$ | -$C_2H_5$ | -n-$C_4H_9$ |
| 16 | 3-$SO_3H$ | -$CH_3$ | -$C_2H_5$ | -sec-$C_4H_9$ |
| 17 | 3-$SO_3H$ | -$CH_3$ | -$C_2H_5$ | -tert-$C_4H_9$ |
| 18 | 3-$SO_3H$ | -$CH_3$ | -$C_2H_5$ | -cyclo-$C_6H_{11}$ |
| 19 | 2-$SO_3H$ | -$CH_3$ | -$C_2H_5$ | -H |
| 20 | 2-$SO_3H$ | -$CH_3$ | -$C_2H_5$ | -$CH_3$ |
| 21 | 2-$SO_3H$ | -$CH_3$ | -$C_2H_5$ | -$C_2H_5$ |
| 22 | 2-$SO_3H$ | -$CH_3$ | -$C_2H_5$ | -n-$C_3H_7$ |
| 23 | 2-$SO_3H$ | -$CH_3$ | -$C_2H_5$ | -iso-$C_3H_7$ |
| 24 | 2-$SO_3H$ | -$CH_3$ | -$C_2H_5$ | -n-$C_4H_9$ |
| 25 | 2-$SO_3H$ | -$CH_3$ | -$C_2H_5$ | -sec-$C_4H_9$ |
| 26 | 2-$SO_3H$ | -$CH_3$ | -$C_2H_5$ | -tert-$C_4H_9$ |
| 27 | 2-$SO_3H$ | -$CH_3$ | -$C_2H_5$ | -cyclo-$C_6H_{11}$ |
| 28 | 4-$SO_3H$ | -$C_2H_5$ | -$C_2H_5$ | -H |
| 29 | 4-$SO_3H$ | -$C_2H_5$ | -$C_2H_5$ | -$CH_3$ |
| 30 | 4-$SO_3H$ | -$C_2H_5$ | -$C_2H_5$ | -$C_2H_5$ |
| 31 | 4-$SO_3H$ | -$C_2H_5$ | -$C_2H_5$ | -n-$C_3H_7$ |

Tabelle 1

| Bsp. | Substituent des Benzringes I | $R_1$ | $R_2$ | $R_3$ |
|---|---|---|---|---|
| 32 | 4-$SO_3H$ | -$C_2H_5$ | -$C_2H_5$ | -iso-$C_3H_7$ |
| 33 | 4-$SO_3H$ | -$C_2H_5$ | -$C_2H_5$ | -n-$C_4H_9$ |
| 34 | 4-$SO_3H$ | -$C_2H_5$ | -$C_2H_5$ | -sec-$C_4H_9$ |
| 35 | 4-$SO_3H$ | -$C_2H_5$ | -$C_2H_5$ | -tert-$C_4H_9$ |
| 36 | 4-$SO_3H$ | -$C_2H_5$ | -$C_2H_5$ | -cyclo-$C_6H_{11}$ |
| 37 | 3-$SO_3H$ | -$C_2H_5$ | -$C_2H_5$ | -H |
| 38 | 3-$SO_3H$ | -$C_2H_5$ | -$C_2H_5$ | -$CH_3$ |
| 39 | 3-$SO_3H$ | -$C_2H_5$ | -$C_2H_5$ | -$C_2H_5$ |
| 40 | 3-$SO_3H$ | -$C_2H_5$ | -$C_2H_5$ | -n-$C_3H_7$ |
| 41 | 3-$SO_3H$ | -$C_2H_5$ | -$C_2H_5$ | -iso-$C_3H_7$ |
| 42 | 3-$SO_3H$ | -$C_2H_5$ | -$C_2H_5$ | -n-$C_4H_9$ |
| 43 | 3-$SO_3H$ | -$C_2H_5$ | -$C_2H_5$ | -sec-$C_4H_9$ |
| 44 | 3-$SO_3H$ | -$C_2H_5$ | -$C_2H_5$ | -tert-$C_4H_9$ |
| 45 | 3-$SO_3H$ | -$C_2H_5$ | -$C_2H_5$ | -cyclo-$C_6H_{11}$ |
| 46 | 2-$SO_3H$ | -$C_2H_5$ | -$C_2H_5$ | -H |
| 47 | 2-$SO_3H$ | -$C_2H_5$ | -$C_2H_5$ | -$CH_3$ |
| 48 | 2-$SO_3H$ | -$C_2H_5$ | -$C_2H_5$ | -$C_2H_5$ |
| 49 | 2-$SO_3H$ | -$C_2H_5$ | -$C_2H_5$ | -n-$C_3H_7$ |
| 50 | 2-$SO_3H$ | -$C_2H_5$ | -$C_2H_5$ | -n-$C_4H_9$ |
| 51 | 2-$SO_3H$ | -$C_2H_5$ | -$C_2H_5$ | -sec-$C_4H_9$ |
| 52 | 2-$SO_3H$ | -$C_2H_5$ | -$C_2H_5$ | -tert-$C_4H_9$ |
| 53 | 2-$SO_3H$ | -$C_2H_5$ | -$C_2H_5$ | -cyclo-$C_6H_{11}$ |
| 54 | 4-$SO_3H$ | -$CH_3$ | -n-$C_3H_7$ | -H |
| 55 | 4-$SO_3H$ | -$CH_3$ | -n-$C_3H_7$ | -$CH_3$ |
| 56 | 4-$SO_3H$ | -$CH_3$ | -n-$C_3H_7$ | -$C_2H_5$ |
| 57 | 4-$SO_3H$ | -$CH_3$ | -n-$C_3H_7$ | -n-$C_3H_7$ |
| 58 | 4-$SO_3H$ | -$CH_3$ | -n-$C_3H_7$ | -iso-$C_3H_7$ |
| 59 | 4-$SO_3H$ | -$CH_3$ | -n-$C_3H_7$ | -sec-$C_4H_9$ |
| 60 | 4-$SO_3H$ | -$CH_3$ | -n-$C_3H_7$ | -tert-$C_4H_9$ |
| 61 | 4-$SO_3H$ | -$CH_3$ | -n-$C_3H_7$ | -cyclo-$C_6H_{11}$ |

Tabelle 1

| Bsp. | Substituent des Benzringes I | $R_1$ | $R_2$ | $R_3$ |
|---|---|---|---|---|
| 62 | 3-$SO_3H$ | -$CH_3$ | -n-$C_3H_7$ | -H |
| 63 | 3-$SO_3H$ | -$CH_3$ | -n-$C_3H_7$ | -$CH_3$ |
| 64 | 3-$SO_3H$ | -$CH_3$ | -n-$C_3H_7$ | -$C_2H_5$ |
| 65 | 3-$SO_3H$ | -$CH_3$ | -n-$C_3H_7$ | -n-$C_3H_7$ |
| 66 | 3-$SO_3H$ | -$CH_3$ | -n-$C_3H_7$ | -iso-$C_3H_7$ |
| 67 | 3-$SO_3H$ | -$CH_3$ | -n-$C_3H_7$ | -sec-$C_4H_9$ |
| 68 | 3-$SO_3H$ | -$CH_3$ | -n-$C_3H_7$ | -tert-$C_4H_9$ |
| 69 | 3-$SO_3H$ | -$CH_3$ | -n-$C_3H_7$ | -cyclo-$C_6H_{11}$ |
| 70 | 2-$SO_3H$ | -$CH_3$ | -n-$C_3H_7$ | -H |
| 71 | 2-$SO_3H$ | -$CH_3$ | -n-$C_3H_7$ | -$CH_3$ |
| 72 | 2-$SO_3H$ | -$CH_3$ | -n-$C_3H_7$ | -$C_2H_5$ |
| 73 | 2-$SO_3H$ | -$CH_3$ | -n-$C_3H_7$ | -n-$C_3H_7$ |
| 74 | 2-$SO_3H$ | -$CH_3$ | -n-$C_3H_7$ | -iso-$C_3H_7$ |
| 75 | 2-$SO_3H$ | -$CH_3$ | -n-$C_3H_7$ | -sec-$C_4H_9$ |
| 76 | 2-$SO_3H$ | -$CH_3$ | -n-$C_3H_7$ | -tert-$C_4H_9$ |
| 77 | 2-$SO_3H$ | -$CH_3$ | -n-$C_3H_7$ | -cyclo-$C_6H_{11}$ |
| 78 | 4-$SO_3H$ | -$C_2H_5$ | -n-$C_3H_7$ | -H |
| 79 | 4-$SO_3H$ | -$C_2H_5$ | -n-$C_3H_7$ | -$CH_3$ |
| 80 | 4-$SO_3H$ | -$C_2H_5$ | -n-$C_3H_7$ | -$C_2H_5$ |
| 81 | 4-$SO_3H$ | -$C_2H_5$ | -n-$C_3H_7$ | -n-$C_3H_7$ |
| 82 | 4-$SO_3H$ | -$C_2H_5$ | -n-$C_3H_7$ | -iso-$C_3H_7$ |
| 83 | 4-$SO_3H$ | -$C_2H_5$ | -n-$C_3H_7$ | -sec-$C_4H_9$ |
| 84 | 4-$SO_3H$ | -$C_2H_5$ | -n-$C_3H_7$ | -tert-$C_4H_9$ |
| 85 | 4-$SO_3H$ | -$C_2H_5$ | -n-$C_3H_7$ | -cyclo-$C_6H_{11}$ |
| 86 | 3-$SO_3H$ | -$C_2H_5$ | -n-$C_3H_7$ | -H |
| 87 | 3-$SO_3H$ | -$C_2H_5$ | -n-$C_3H_7$ | -$CH_3$ |
| 88 | 3-$SO_3H$ | -$C_2H_5$ | -n-$C_3H_7$ | -$C_2H_5$ |
| 89 | 3-$SO_3H$ | -$C_2H_5$ | -n-$C_3H_7$ | -n-$C_3H_7$ |
| 90 | 3-$SO_3H$ | -$C_2H_5$ | -n-$C_3H_7$ | -iso-$C_3H_7$ |
| 91 | 3-$SO_3H$ | -$C_2H_5$ | -n-$C_3H_7$ | -sec-$C_4H_9$ |

Tabelle 1

| Bsp. | Substituent des Benzringes I | $R_1$ | $R_2$ | $R_3$ |
|---|---|---|---|---|
| 92 | $3\text{-}SO_3H$ | $-C_2H_5$ | $-n\text{-}C_3H_7$ | $-tert\text{-}C_4H_9$ |
| 93 | $3\text{-}SO_3H$ | $-C_2H_5$ | $-n\text{-}C_3H_7$ | $-cyclo\text{-}C_6H_{11}$ |
| 94 | $2\text{-}SO_3H$ | $-C_2H_5$ | $-n\text{-}C_3H_7$ | -H |
| 95 | $2\text{-}SO_3H$ | $-C_2H_5$ | $-n\text{-}C_3H_7$ | $-CH_3$ |
| 96 | $2\text{-}SO_3H$ | $-C_2H_5$ | $-n\text{-}C_3H_7$ | $-C_2H_5$ |
| 97 | $2\text{-}SO_3H$ | $-C_2H_5$ | $-n\text{-}C_3H_7$ | $-n\text{-}C_3H_7$ |
| 98 | $2\text{-}SO_3H$ | $-C_2H_5$ | $-n\text{-}C_3H_7$ | $-iso\text{-}C_3H_7$ |
| 99 | $2\text{-}SO_3H$ | $-C_2H_5$ | $-n\text{-}C_3H_7$ | $-sec\text{-}C_4H_9$ |
| 100 | $2\text{-}SO_3H$ | $-C_2H_5$ | $-n\text{-}C_3H_7$ | $-tert\text{-}C_4H_9$ |
| 101 | $2\text{-}SO_3H$ | $-C_2H_5$ | $-n\text{-}C_3H_7$ | $-cyclo\text{-}C_6H_{11}$ |
| 102 | $4\text{-}SO_3H$ | $-n\text{-}C_3H_7$ | $-n\text{-}C_3H_7$ | -H |
| 103 | $4\text{-}SO_3H$ | $-CH_3$ | $-n\text{-}C_4H_9$ | -H |
| 104 | $4\text{-}SO_3H$ | $-C_2H_5$ | $-n\text{-}C_4H_9$ | -H |
| 105 | $4\text{-}SO_3H$ | $-n\text{-}C_3H_7$ | $-n\text{-}C_4H_9$ | -H |
| 106 | $4\text{-}SO_3H$ | $-n\text{-}C_4H_9$ | $-n\text{-}C_4H_9$ | -H |
| 107 | $3\text{-}SO_3H$ | $-n\text{-}C_3H_7$ | $-n\text{-}C_3H_7$ | -H |
| 108 | $3\text{-}SO_3H$ | $-CH_3$ | $-n\text{-}C_4H_9$ | -H |
| 109 | $3\text{-}SO_3H$ | $-C_2H_5$ | $-n\text{-}C_4H_9$ | -H |
| 110 | $3\text{-}SO_3H$ | $-n\text{-}C_3H_7$ | $-n\text{-}C_4H_9$ | -H |
| 111 | $3\text{-}SO_3H$ | $-n\text{-}C_4H_9$ | $-n\text{-}C_4H_9$ | -H |
| 112 | $3\text{-}SO_3H$ | $-n\text{-}C_3H_7$ | $-n\text{-}C_3H_7$ | -H |
| 113 | $4\text{-}SO_3H$ | -H | $-tert\text{-}C_4H_9$ | -H |

Beispiele 114 bis bis 117: Verfährt man wie in Beispiel 1 angegeben, verwendet jedoch anstelle von 28 Teilen 4-amino-azobenzol-4'-sulfonsäure eine äquimolare Menge einer der in der folgenden Tabelle 2 in Spalte 2 angegebenen Azoverbindung, so erhält man die in Spalte 3 in Form der freien Säuren angegebenen Farbstoffe, die synthetische und natürliche Polyamidmaterialien in gelben Farbtönen färben.

Tabelle 2

| Bsp. | Azoverbindung | Farbstoff |
|---|---|---|
| 114 | 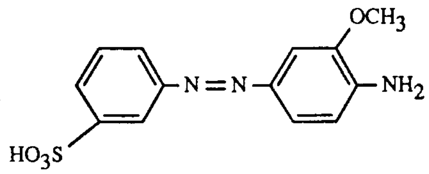 | 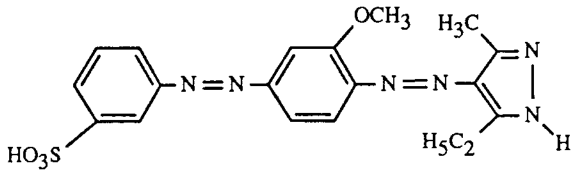 |
| 115 | 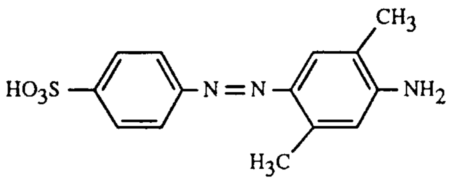 | 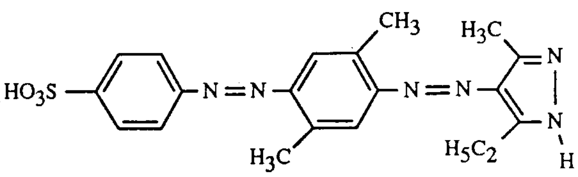 |
| 116 | 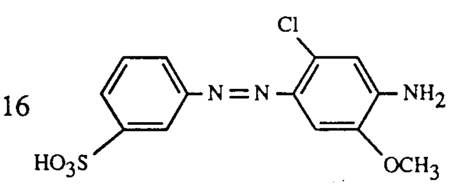 | 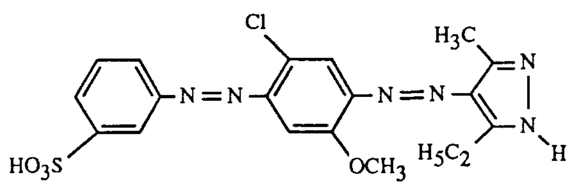 |
| 117 | 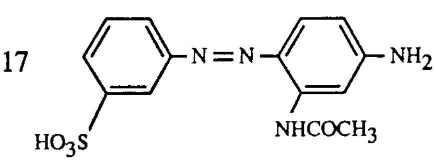 | 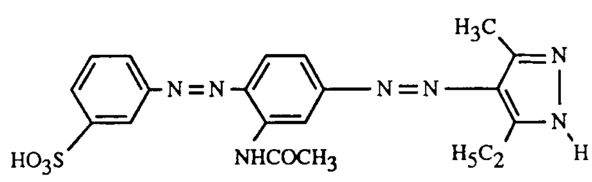 |

Beispiel 118: Verfährt man wie in Beispiel 114 angegeben, verwendet jedoch anstelle von 14 Teilen 2,4-Hexandion eine äquimolare Menge 3,5-Heptandion, so erhält man den Farbstoff der Formel

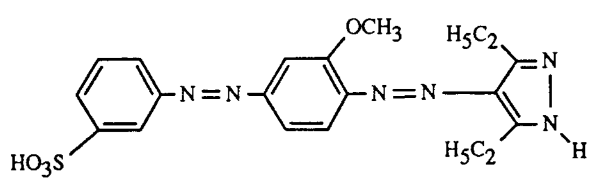

der synthetische und natürliche Polyamidmaterialien in gelben Farbtönen färbt.

Färbebeispiel 1: Man färbt 10 Teile Polyamid-6.6 Fasermaterial (Helancatrikot) in 500 Teilen einer wässrigen Flotte, die 2 g/l Ammonacetat enthält und mit Essigsäure auf pH 5 gestellt wird. Als Farbstoffe werden 0,05 % des roten Farbstoffs der in Form der freien Säure der Formel

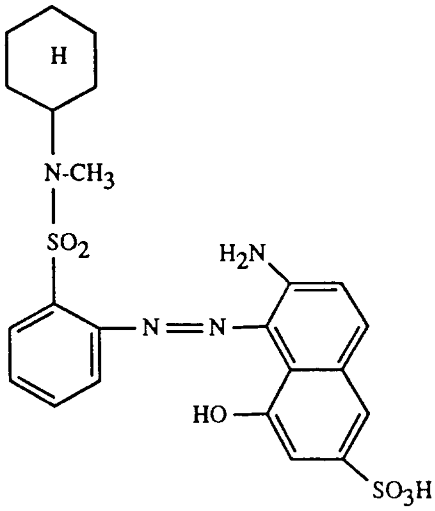

(102)

entspricht, 0,18 % des gelben Farbstoffs der in Form der freien Säure der Formel (101) entspricht und 0,17 % des blauen Farbstoffs der in Form der freien Säure der Formel

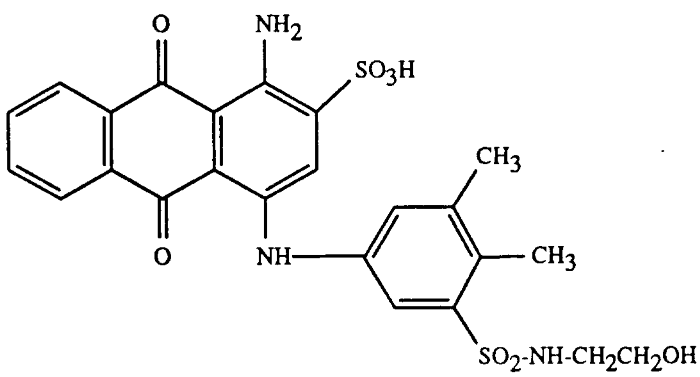

(103)

entspricht, verwendet, wobei sich die Mengenangaben auf das Fasergewicht beziehen.

Die Färbedauer bei einer Temperatur von 98° beträgt 30 bis 90 Minuten. Das gefärbte Polyamidfasermaterial wird anschliessend herausgenommen und wie üblich gespült und getrocknet. Man erhält ein in einem braunen Farbton völlig egal gefärbtes Gewebestück, das keinerlei materialbedingte Streifigkeit aufweist.

Färbebeispiel 2: Man färbt 10 Teile Polyamid 6.6-Garn in 400 Teilen einer wässrigen Flotte, die 1,5 g/l Ammonacetat enthält und mit Essigsäure auf pH 5,5 gestellt wird. Als Farbstoffe werden 0,1 % des Farbstoffs der Formel (102), 0,13 % des Farbstoffs der Formel (101) und 0,12 % des Farbstoffs der Formel (103) verwendet, wobei sich die Mengenangaben auf das Fasergewicht beziehen. Das Färbebad wird innerhalb von 30 Minuten auf 98°C erhitzt und 60 Minuten bei 96° bis 98° gehalten. Das gefärbte Garn wird anschliessend herausgenommen und wie üblich gespült und getrocknet. Man erhält ein in einem braunen Farbton gefärbtes Garn.

Färbebeispiel 3: Man färbt 10 Teile Polyamid 6.6-Teppichgarn in 400 Teilen einer wässrigen Flotte, die 1,5 g/l Ammonacetat enthält und mit Essigsäure auf pH 5,5 gestellt wird. Als Farbstoffe werden 0,15 % des roten Farbstoffs der Formel

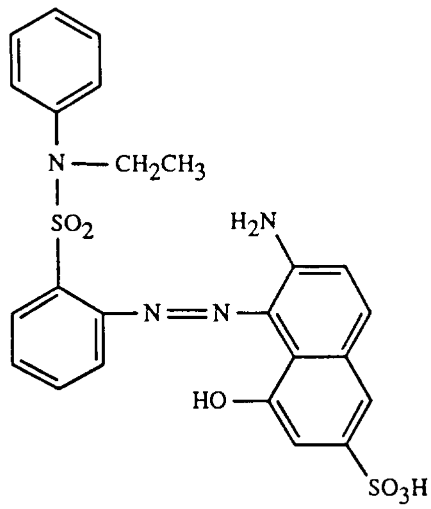

(104),

0,625 % des gelben Farbstoffs der Formel (101) und 0,52 % des blauen Farbstoffs der Formel (103) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in einem braunen Farbton gefärbtes Garn.

Färbebeispiel 4: Wenn man wie in Färbebeispiel 3 angegeben vorgeht, jedoch anstelle der Farbstoffe der Formeln (104), (101) und (103)
0,32 % des Farbstoffs der Formel (102),
0,46 % des Farbstoffs der Formel (101) und
0,61 % des Farbstoffs der Formel (103)
verwendet, so erhält man ebenfalls ein in einem braunen Farbton gefärbtes Garn.

Färbebeispiel 5: (Teppichdrück) Ein Velours-Teppich aus Polyamid-6 mit einem Florgewicht von 400 g/m$^2$ wird für die Fondfärbung mit einer wässrigen Klotzflotte der nachstehenden Zusammensetzung
0,1 g/l Farbstoff der Formel (101),
0,1 g/l Farbstoff der Formel (103),
2 g/l Verdicker auf der Basis natürlicher Polysaccharide,
0,5 g/l Netzmittel auf der Basis eines sulfatierten Alkyl-Aryl-Polyglycolates, und
0,5 g/l Entschäumer auf der Basis hochsiedender Alkohole,
die mit Essigsäure auf den pH-Wert 4,5 eingestellt ist, foulardiert und auf 80 % der Flottenaufnahme abgequetscht. Auf den so vorbehandelten Teppich wird über eine Druckschablone ein Muster mit der nachstehenden wässrigen Druckpaste aufgebracht:
1 g/l Farbstoff der Formel (101),
20 g/l Farbstoff der Formel (102),
10 g/l Farbstoff der Formel (103),
15 g/l Verdicker auf der Basis natürlicher Polysaccharide,
2 g/l Netzmittel auf der Basis eines sulfatierten Alkyl-Aryl-Polyglycolates,
1 g/l Entschäumer auf der Basis hochsiedender Alkohole.
Die Druckpaste ist mit Essigsäure auf pH-Wert 4,5 gestellt.

Das bedrückte Material wird anschliessend während 5 Minuten mit Sattdampf von 101° behandelt zur Fixierung der Farbstoffe, gespült, neutralisiert, erneut gespült und getrocknet.

Man erhält einen Verlours-Teppich mit bordeaux-farbigem Muster auf blassolivem Untergrund mit sehr scharfen Konturen, welcher eine gute Penetration und keinerlei "Frosting" aufweist.

Färbebeispiel 6: (Teppich-Kontinue-Färbung)

2,7 Teile des gelben Farbstoffes der Formel (101), 1,2 Teile des roten Farbstoffes der Formel (102) und 1,3 Teile des blauen Farbstoffes der Formel (103) werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehr, 5,0 Teile eines koazervatbildenden Klotzhilfsmittels auf der Basis eines Kondensationsproduktes einer höher molekularen Fettsäure mit einem Oxyalkylamin, 2,0 Teilen krist. Mononatriumphosphat und 1,0 Teile krist. Dinatriumphosphat in 500 Teilen kaltem Wasser zugegeben. Anschliessend wird mit kaltem Wasser auf 1000 Teile aufgefüllt. Von dieser, einen pH-Wert von 5,5 bis 6,5 aufweisenden

Flotte werden 300 %, bezogen auf das Teppichgewicht, auf einen Polyamid-6.6-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmaschine erhält man einen in einem neutral braunen Farbton gefärbten Teppich.

Beispiel 7: Verfährt man wie in Beispiel 6 angegeben und verwendet bei sonst gleicher Verfahrensweise anstelle von 1,2 Teilen des gelben Farbstoffs der Formel (101) 1,2 Teile des gelben Farbstoffes aus Beispiel 2 oder 1,2 Teile des gelben Farbstoffes aus Beispiel 114, so erhält man einen in einem braunen Farbton gefärbten Teppich.

## Patentansprüche

**Patentansprüche für folgende Vertragsstaaten : BE, CH, DE, FR, GB, IT, LI, NL**

**1.** Azofarbstoffe der Formel

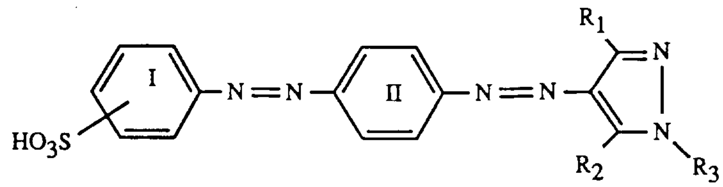

(1),

worin $R_1$ Wasserstoff oder $C_1$-$C_4$-Alkyl, $R_2$ $C_2$-$C_4$-Alkyl, $R_3$ Wasserstoff, $C_1$-$C_4$-Alkyl oder gegebenenfalls substituiertes $C_5$-$C_7$-Cycloalkyl oder Phenyl sind und die Benzringe I und II gegebenenfalls substituiert sind.

**2.** Azofarbstoffe gemäss Anspruch 1, dadurch gekennzeichnet, dass $R_1$ Methyl oder Aethyl ist.

**3.** Azofarbstoffe gemäss einem der Ansprüche 1 und 2, dadurch gekennzeichnet, dass $R_2$ Aethyl ist.

**4.** Azofarbstoffe gemäss einem der Ansprüche 1 bis 3, dadurch gekennzeichnet, dass $R_3$ Wasserstoff ist.

**5.** Azofarbstoffe gemäss einem der Ansprüche 1 bis 4, dadurch gekennzeichnet, dass die Sulfogruppe an den Benzring I in meta- oder para-Stellung zur Azogruppe gebunden ist.

**6.** Azofarbstoffe gemäss Anspruch 1, der Formel

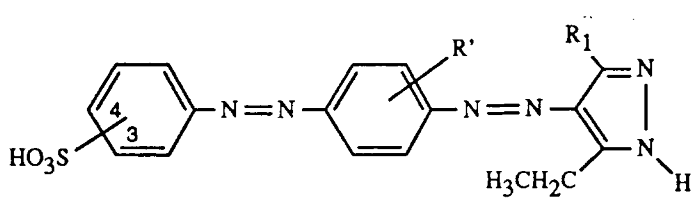

(3),

worin $R_1$ Methyl oder Aethyl und R' Wasserstoff oder Methoxy bedeutet und die Sulfogruppe in der bezeichneten 3- oder 4-Position an den Benzring gebunden ist.

**7.** Verfahren zur Herstellung von Azofarbstoffen gemäss Anspruch 1, dadurch gekennzeichnet, dass man ein Amin der Formel

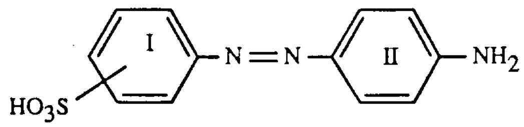

(7)

diazotiert und auf eine Kupplungskomponente der Formel

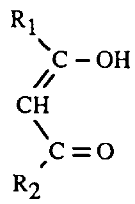

(8)

kuppelt und das Reaktionsprodukt der Formel

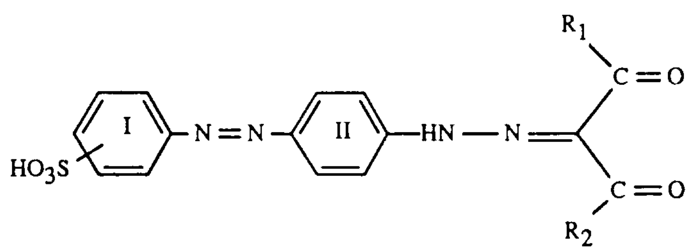

(9)

mit einem Hydrazin der Formel

$H_2N$-$NH$-$R_3$ (10)

umsetzt, wobei $R_1$, $R_2$ und $R_3$ die in Anspruch 1 angegebenen Bedeutungen haben und die Benzringe I und II gegebenenfalls substituiert sind.

**8.** Verfahren zum Trichromie-Färben oder -Bedrücken von natürlichen und synthetischen Polyamidmaterialien mit Farbstoffmischungen, dadurch gekennzeichnet, dass man mindestens einen gelb- oder orangefärbenden Farbstoff der Formel

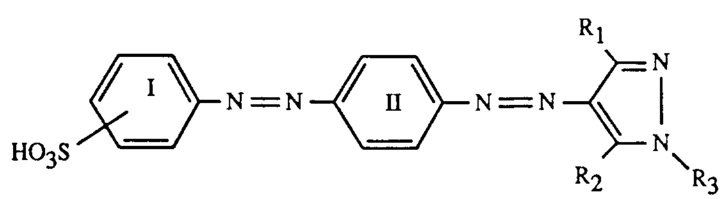

(1),

worin $R_1$ Wasserstoff oder $C_1$-$C_4$-Alkyl, $R_2$ $C_2$-$C_4$-Alkyl, $R_3$ Wasserstoff, $C_1$-$C_4$-Alkyl oder gegebenenfalls substituiertes $C_5$-$C_7$-Cycloalkyl oder Phenyl sind und die Benzringe I und II gegebenenfalls substituiert sind, zusammen mit mindestens einem rotfärbenden Farbstoff und mindestens einem blaufärbenden Farbstoff verwendet.

**9.** Verfahren gemäss Anspruch 8 zum Trichromie-Färben oder -Bedrucken, dadurch gekennzeichnet, dass man mindestens einen der rotfärbenden Farbstoffe der Formeln (14), (15) und (16):

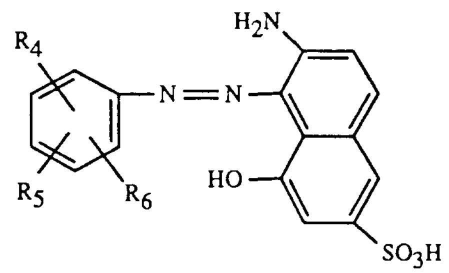

(14),

worin $R_4$ gegebenenfalls substituiertes $C_1$-$C_8$-Alkyl, Halogen, gegebenenfalls im Phenyl ring durch $C_1$-$C_4$-Alkyl substituiertes Phenylsulfonyl oder Phenoxysulfonyl, Cyclohexyloxycarbonylamino, $C_2$-$C_4$-Alkanoylamino, gegebenenfalls im Phenylring durch Halogen substituiertes Benzoylamino, 1-Azacycloheptan-N-sulfonyl oder

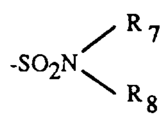

ist, wobei $R_7$ $C_1$-$C_8$-Alkyl oder gegebenenfalls durch $C_1$-$C_4$-Alkyl substituiertes Phenyl oder Cyclohexyl und $R_8$ Wasserstoff oder $C_1$-$C_8$-Alkyl ist, $R_5$ Wasserstoff, Halogen, $C_1$-$C_8$-Alkyl oder $C_2$-$C_4$-Alkanoylamino und $R_6$ Wasserstoff oder Halogen ist,

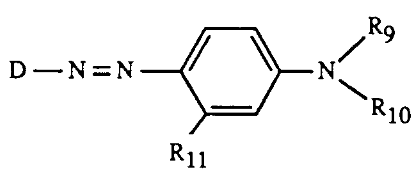

(15),

worin D gegebenenfalls substituiertes Phenyl, Thiophenyl oder Benzthiazolyl, $R_9$ $C_1$-$C_8$-Alkyl, $R_{10}$ gegebenenfalls substituiertes $C_1$-$C_8$-Alkyl und $R_{11}$ Wasserstoff oder $C_1$-$C_4$-Alkyl ist, und

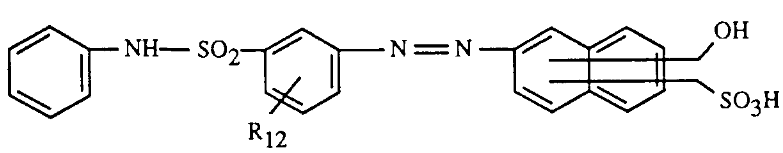

(16),

worin $R_{12}$ $C_1$-$C_4$-Alkyl ist, zusammen mit mindestens einem blaufärbenden Farbstoff der Formel

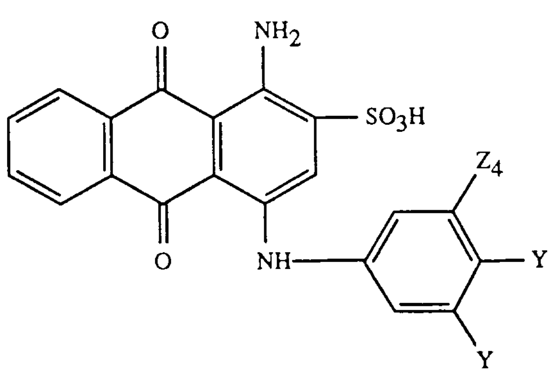

(17),

worin ein Y Wasserstoff oder Methyl und das andere Y $C_{2-4}$-Alkanoylamino oder $C_2$-$C_4$-Hydroxyalkylsulphamoyl bedeutet und $Z_4$ Wasserstoff oder Methyl ist, verwendet.

**10.** Verfahren gemäss einem der Ansprüche 8 und 9 zum Trichromie-Färben oder -Bedrucken, dadurch gekennzeichnet, dass man mindestens einen der rotfärbenden Farbstoffe der Formeln

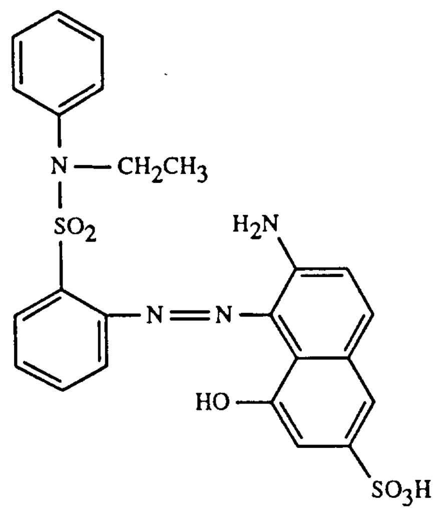

(18),

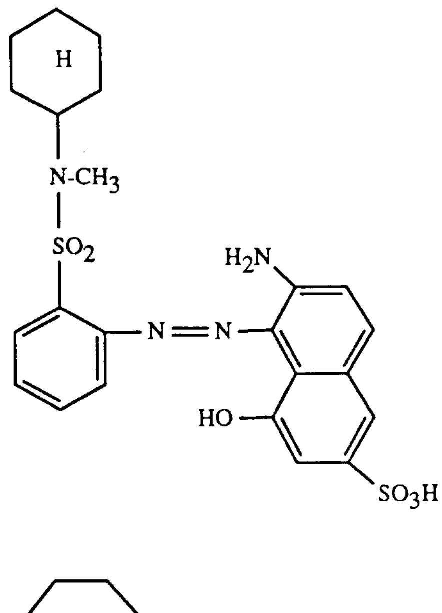

(19) und

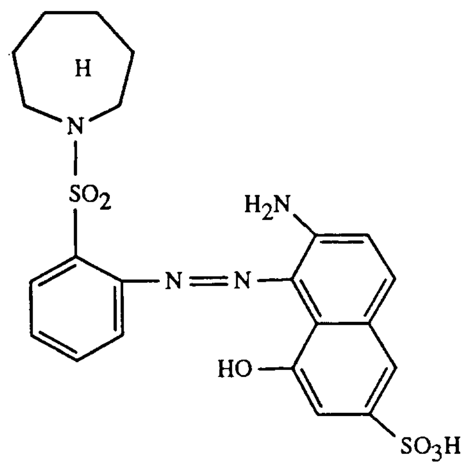

(20)

zusammen mit mindestens einem der blaufärbenden Farbstoffe der Formeln

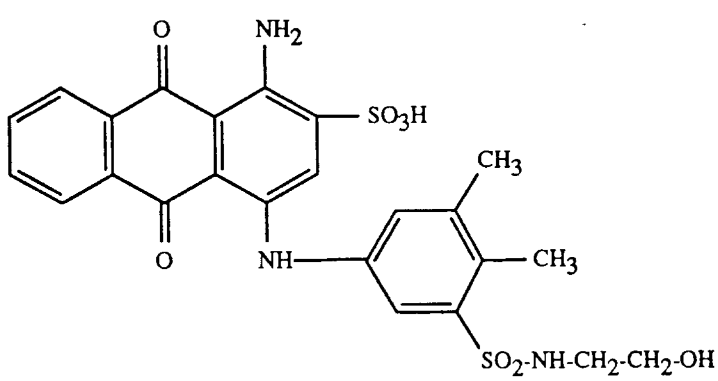

(21),

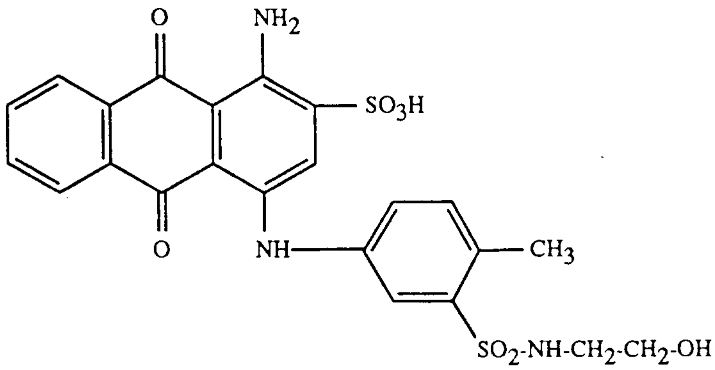

(22),

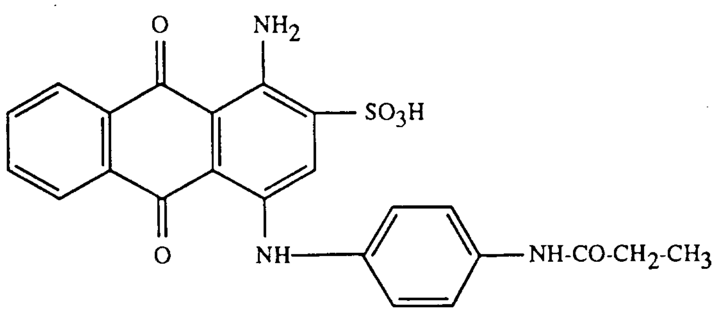

(23),

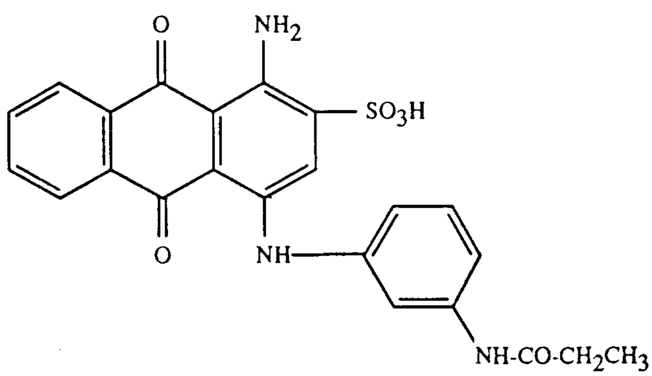

(24) und

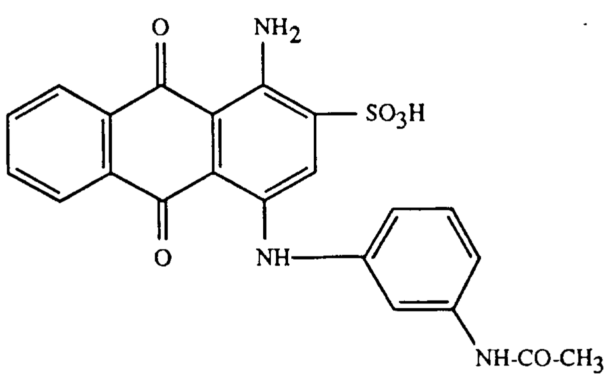

(25)

verwendet.

11. Verwendung der Azofarbstoffe gemäss den Ansprüchen 1 bis 6 bzw. der gemäss Anspruch 7 erhaltenen Azofarbstoffe zum Färben oder Bedrucken von natürlichen und synthetischen Polyamidmaterialien.

12. Das nach dem Verfahren gemäss Anspruch 8 gefärbte oder bedruckte Polyamidmaterial, insbesondere Polyamid-Teppiche.

**Patentansprüche für folgenden Vertragsstaat : ES**

1. Verfahren zur Herstellung von Azofarbstoffen der Formel

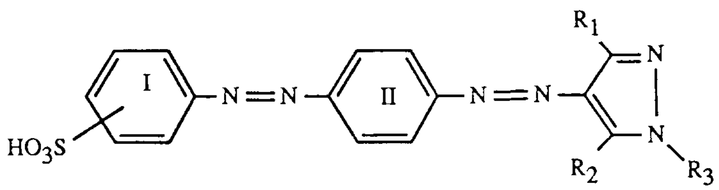

(1),

worin $R_1$ Wasserstoff oder $C_1$-$C_4$-Alkyl, $R_2$ $C_2$-$C_4$-Alkyl, $R_3$ Wasserstoff, $C_1$-$C_4$-Alkyl oder gegebenenfalls substituiertes $C_5$-$C_7$-Cycloalkyl oder Phenyl sind und die Benzringe I und II gegebenenfalls substituiert sind, dadurch gekennzeichnet, dass man ein Amin der Formel

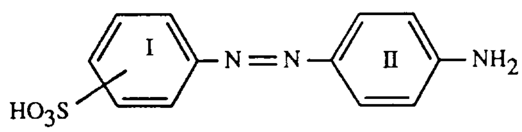

(7)

diazotiert und auf eine Kupplungskomponente der Formel

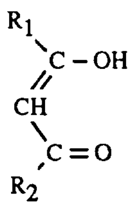

(8)

kuppelt und das Reaktionsprodukt der Formel

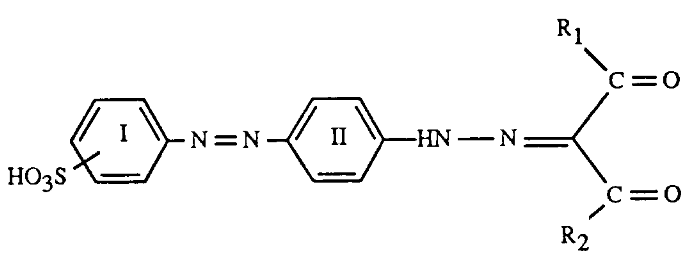

(9)

mit einem Hydrazin der Formel

$H_2N$-$NH$-$R_3$ (10)

umsetzt, wobei $R_1$, $R_2$ und $R_3$ die unter Formel (1) angegebenen Bedeutungen haben und die Benzringe I und II gegebenenfalls substituiert sind.

2. Verfahren gemäss Anspruch 1, dadurch gekennzeichnet, dass man eine Kupplungskomponente der Formel (8) verwendet, worin $R_1$ Methyl oder Aethyl ist.

**3.** Verfahren gemäss einem der Ansprüche 1 und 2, dadurch gekennzeichnet, dass man eine Kupplungskomponente der Formel (8) verwendet, worin $R_2$ Aethyl ist.

**4.** Verfahren gemäss einem der Ansprüche 1 bis 3, dadurch gekennzeichnet, dass man eine Verbindung der Formel (10) verwendet, worin $R_3$ Wasserstoff ist.

**5.** Verfahren gemäss einem der Ansprüche 1 bis 4, dadurch gekennzeichnet, dass man ein Amin der Formel (7) verwendet, worin die Sulfogruppe an den Benzring I in meta- oder para-Stellung zur Azogruppe gebunden ist.

**6.** Verfahren gemäss Anspruch 1, dadurch gekennzeichnet, dass man ein Amin der Formel

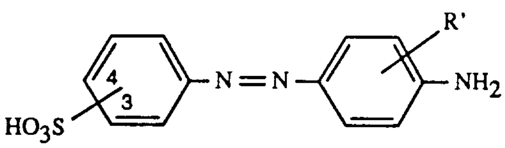

(11),

worin R' Wasserstoff oder Methoxy bedeutet und die Sulfogruppe in 3- oder 4-Position an den Benzring gebunden ist, diazotiert und auf eine Kupplungskomponente der Formel

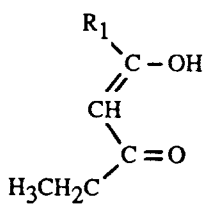

(12)

worin $R_1$ Methyl oder Aethyl ist, kuppelt und das Reaktionsprodukt mit einer Verbindung der Formel

$H_2N\text{-}NH_2$ (13)

umsetzt.

**7.** Verfahren zum Trichromie-Färben oder -Bedrücken von natürlichen und synthetischen Polyamidmaterialien mit Farbstoffmischungen, dadurch gekennzeichnet, dass man mindestens einen gemäss Anspruch 1 hergestellten gelb- oder orangefärbenden Farbstoff der Formel

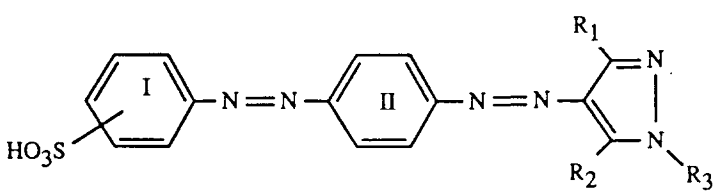

(1),

worin $R_1$ Wasserstoff oder $C_1$-$C_4$-Alkyl, $R_2$ $C_2$-$C_4$-Alkyl, $R_3$ Wasserstoff, $C_1$-$C_4$-Alkyl oder gegebenenfalls substituiertes $C_5$-$C_7$-Cycloalkyl oder Phenyl sind und die Benzringe I und II gegebenenfalls substituiert sind, zusammen mit mindestens einem rotfärbenden Farbstoff und mindestens einem blaufärbenden Farbstoff verwendet.

**8.** Verfahren gemäss Anspruch 7 zum Trichromie-Färben oder -Bedrucken, dadurch gekennzeichnet, dass man mindestens einen der rotfärbenden Farbstoffe der Formeln (14), (15) und (16):

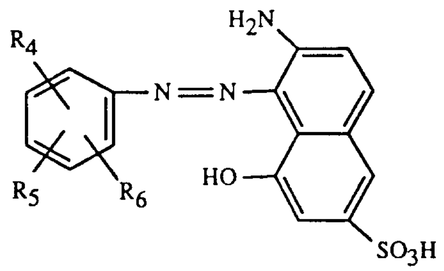

(14),

worin $R_4$ gegebenenfalls substituiertes $C_1$-$C_8$-Alkyl, Halogen, gegebenenfalls im Phenylring durch $C_1$-$C_4$-Alkyl substituiertes Phenylsulfonyl oder Phenoxysulfonyl, Cyclohexyloxycarbonylamino, $C_2$-$C_4$-Alkanoylamino, gegebenenfalls im Phenylring durch Halogen substituiertes Benzoylamino, 1-Azacycloheptan-N-sulfonyl oder

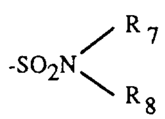

ist, wobei $R_7$ $C_1$-$C_8$-Alkyl oder gegebenenfalls durch $C_1$-$C_4$-Alkyl substituiertes Phenyl oder Cyclohexyl und $R_8$ Wasserstoff oder $C_1$-$C_8$-Alkyl ist, $R_5$ Wasserstoff, Halogen, $C_1$-$C_8$-Alkyl oder $C_2$-$C_4$-Alkanoylamino und $R_6$ Wasserstoff oder Halogen ist,

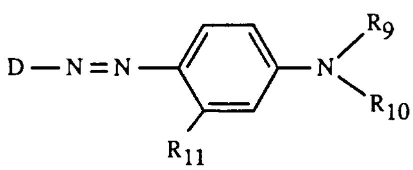

(15),

worin D gegebenenfalls substituiertes Phenyl, Thiophenyl oder Benzthiazolyl, $R_9$ $C_1$-$C_8$-Alkyl, $R_{10}$ gegebenenfalls substituiertes $C_1$-$C_8$-Alkyl und $R_{11}$ Wasserstoff oder $C_1$-$C_4$-Alkyl ist, und

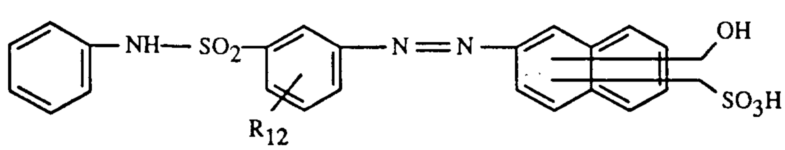

(16),

worin $R_{12}$ $C_1$-$C_4$-Alkyl ist, zusammen mit mindestens einem blaufärbenden Farbstoff der Formel

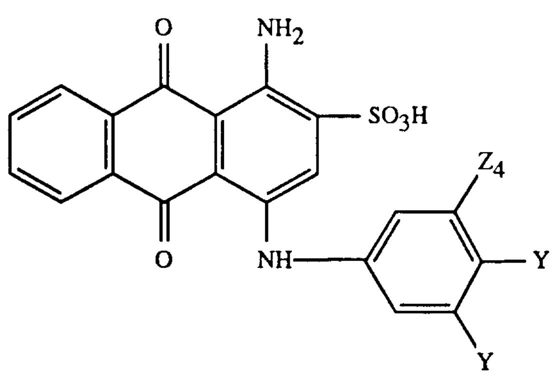

(17),

worin ein Y Wasserstoff oder Methyl und das andere Y $C_{2-4}$-Alkanoylamino oder $C_2$-$C_4$-Hydroxyalkylsulphamoyl bedeutet und $Z_4$ Wasserstoff oder Methyl ist, verwendet.

**9.** Verfahren gemäss einem der Ansprüche 7 und 8 zum Trichromie-Färben oder -Bedrucken, dadurch gekennzeichnet, dass man mindestens einen der rotfärbenden Farbstoffe der Formeln

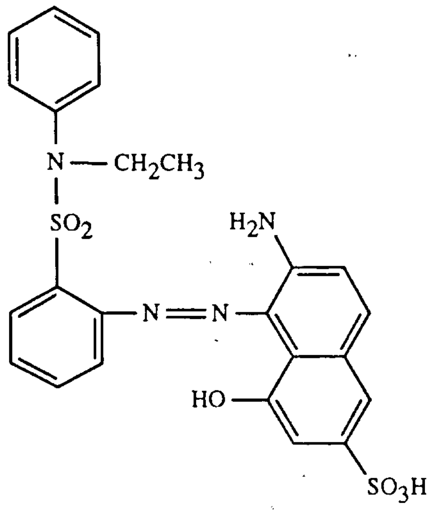

(18),

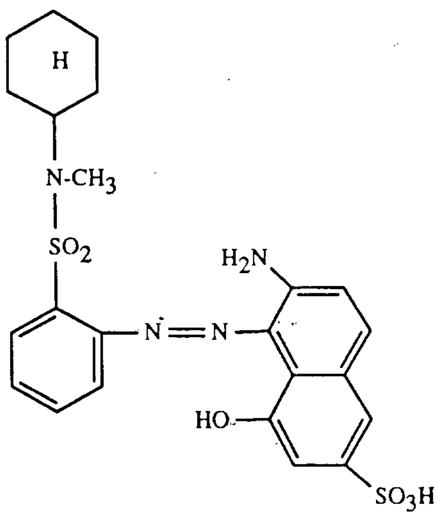

(19) und

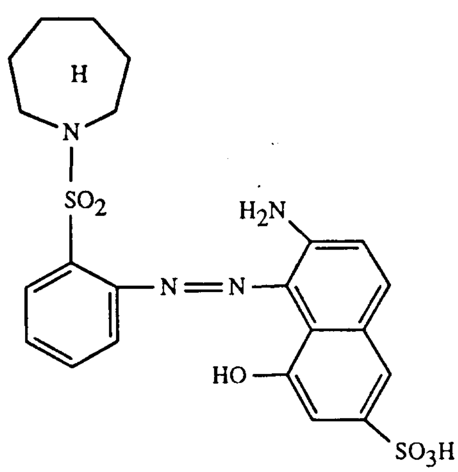

(20)

zusammen mit mindestens einem der blaufärbenden Farbstoffe der Formeln

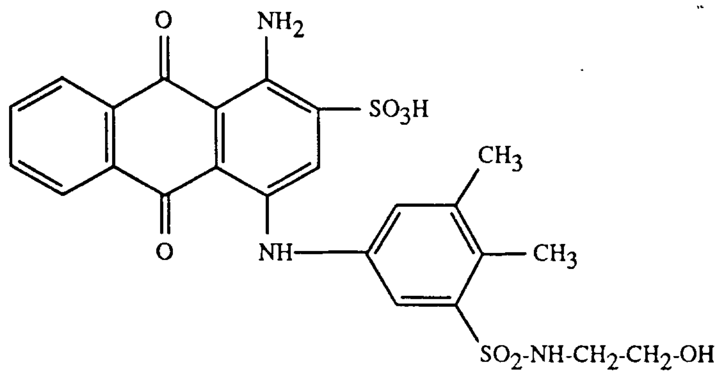

(21),

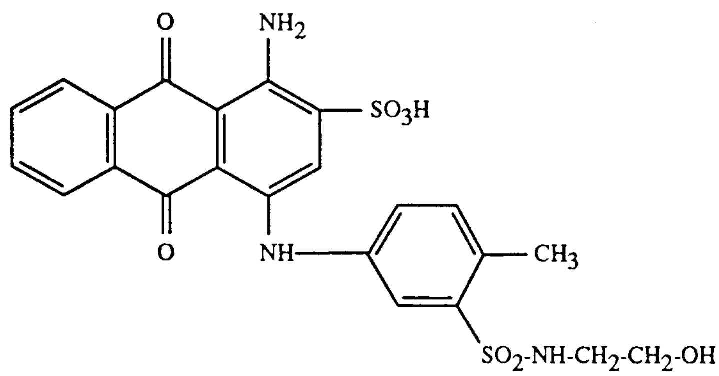

(22),

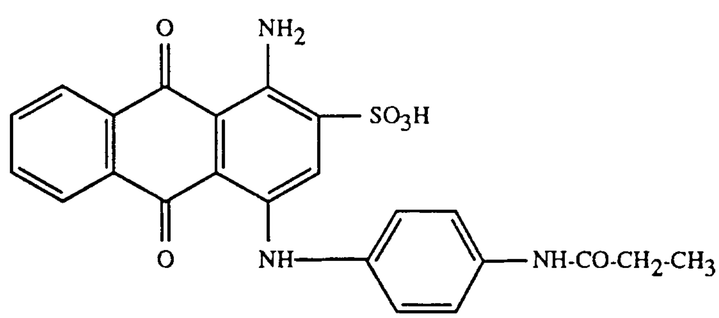

(23),

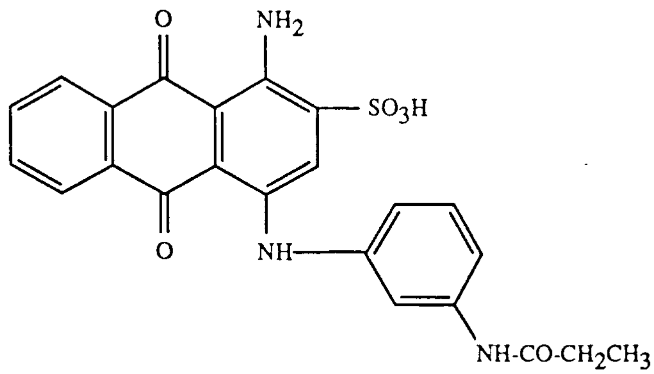

(24) und

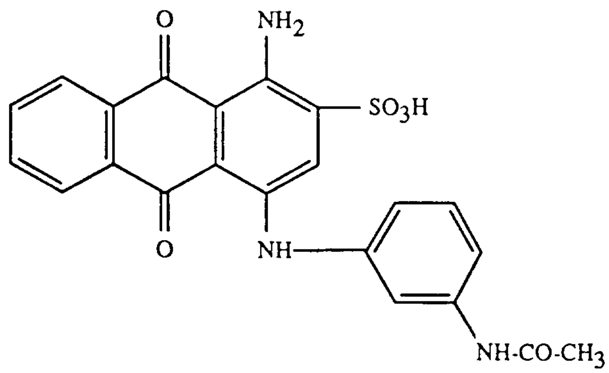

(25)

verwendet.

10. Verwendung der gemäss den Ansprüchen 1 bis 6 erhaltenen Azofarbstoffe zum Färben oder Bedrükken von natürlichen und synthetischen Polyamidmaterialien.

11. Das nach dem Verfahren gemäss Anspruch 7 gefärbte oder bedruckte Polyamidmaterial, insbesondere Polyamid-Teppiche.

**Claims**
**Claims for the following Contracting States : BE, CH, DE, FR, GB, IT, LI, NL**

1. An azo dye of formula

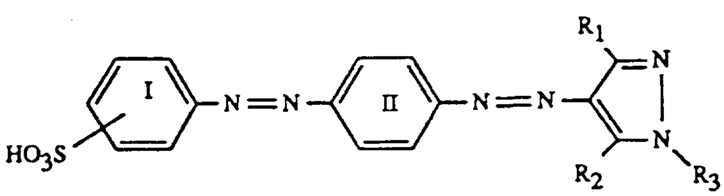

(1),

wherein $R_1$ is hydrogen or $C_1$-$C_4$alkyl, $R_2$ is $C_2$-$C_4$alkyl, $R_3$ is hydrogen, $C_1$-$C_4$alkyl or unsubstituted or substituted $C_5$-$C_7$cycloalkyl or phenyl, and the benzene rings I and II are unsubstituted or substituted.

2. An azo dye according to claim 1, wherein $R_1$ is methyl or ethyl.

3. An azo dye according to either claim 1 or claim 2, wherein $R_2$ is ethyl.

4. An azo dye according to any one of claims 1 to 3, wherein $R_3$ is hydrogen.

5. An azo dye according to any one of claims 1 to 4, wherein the sulfo group is attached to the benzene ring I in meta- or para-position to the azo group.

6. An azo dye according to claim 1, of formula

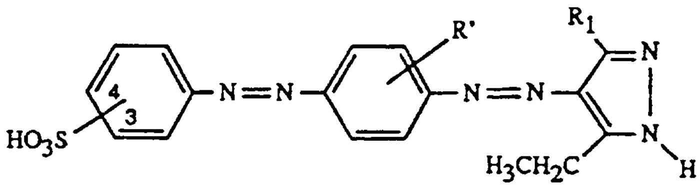

(3),

wherein $R_1$ is methyl or ethyl and R' is hydrogen or methoxy, and the sulfo group is attached to the benzene ring in the indicated 3- or 4-position.

7. A process for the preparation of an azo dye according to claim 1, which comprises diazotizing an amine of formula

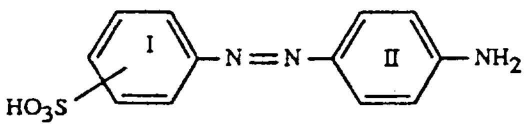

(7)

and coupling the diazotized amine to a coupling component of formula

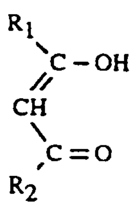

(8)

and reacting the reaction product of formula

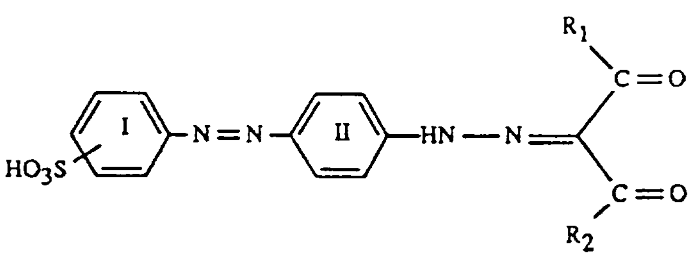

(9)

with a hydrazine of formula

$H_2N\text{-}NH\text{-}R_3$ (10)

wherein $R_1$, $R_2$ and $R_3$ are as defined in claim 1 and the benzene rings I and II are unsubstituted or substituted.

8. A process for the trichromatic dyeing or printing of natural and synthetic polyamide materials with a mixture of dyes, which comprises using at least one yellow- or orange-dyeing dye of formula

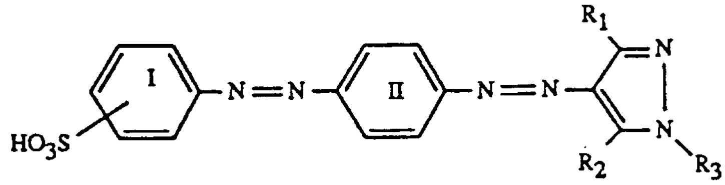

(1),

wherein $R_1$ is hydrogen or $C_1$-$C_4$alkyl, $R_2$ is $C_2$-$C_4$alkyl, $R_3$ is hydrogen, $C_1$-$C_4$alkyl or unsubstituted or substituted $C_5$-$C_7$cycloalkyl or phenyl, and the benzene rings I and II are unsubstituted or substituted, together with at least one red-dyeing dye and at least one blue-dyeing dye.

9. A process according to claim 8 for trichromatic dyeing or printing, which comprises using at least one of the red-dyeing dyes of formulae (14), (15) and (16):

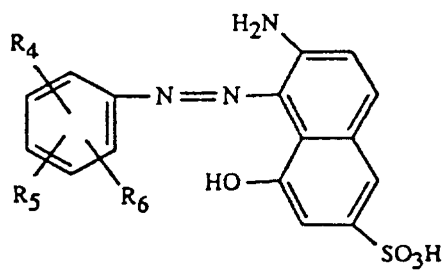

(14),

wherein $R_4$ is unsubstituted or substituted $C_1$-$C_8$alkyl, halogen, phenylsulfonyl or phenoxysulfonyl, each unsubstituted or substituted in the phenyl ring by $C_1$-$C_4$alkyl, or is cyclohexyloxycarbonylamino, $C_2$-$C_4$alkanoylamino, benzoylamino which is unsubstituted or substituted in the phenyl ring by halogen, or is 1-azacycloheptane-N-sulfonyl or

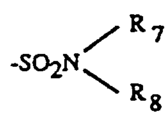

,

wherein $R_7$ is $C_1$-$C_8$alkyl, phenyl or cyclohexyl, or $C_1$-$C_4$alkyl-substituted phenyl or cyclohexyl, and $R_8$ is hydrogen or $C_1$-$C_8$alkyl, $R_5$ is hydrogen, halogen, $C_1$-$C_8$alkyl or $C_2$-$C_4$alkanoylamino, and $R_6$ is hydrogen or halogen,

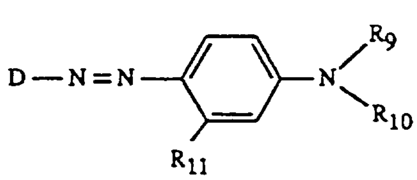

(15),

wherein D is unsubstituted or substituted phenyl, thiophenyl or benzothiazolyl, $R_9$ is $C_1$-$C_8$alkyl, $R_{10}$ is unsubstituted or substituted $C_1$-$C_8$alkyl, and $R_{11}$ is hydrogen or $C_1$-$C_4$alkyl, and

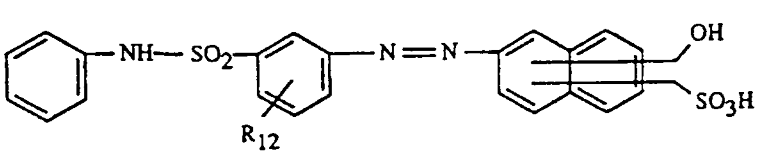

(16),

wherein $R_{12}$ is $C_1$-$C_4$alkyl, together with at least one blue-dyeing dye of formula

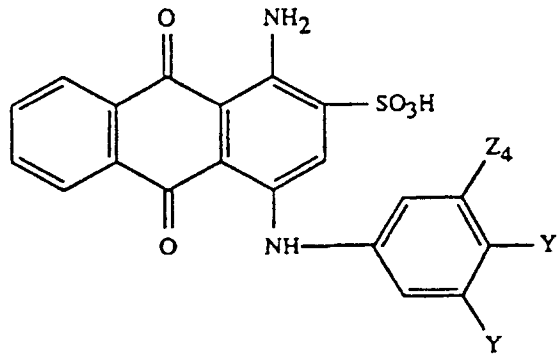

(17),

wherein one Y is hydrogen or methyl and the other Y is $C_{2-4}$alkanoylamino or $C_{2-4}$hydroxyalkylsulfamoyl, and $Z_4$ is hydrogen or methyl.

**10.** A process according to either claim 8 or claim 9 for trichromatic dyeing or printing, which comprises using at least one of the red-dyeing dyes of formulae

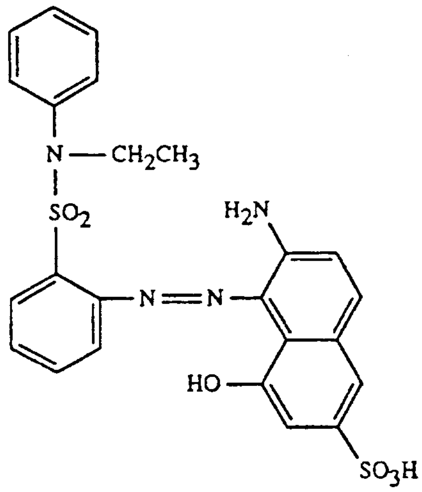

(18),

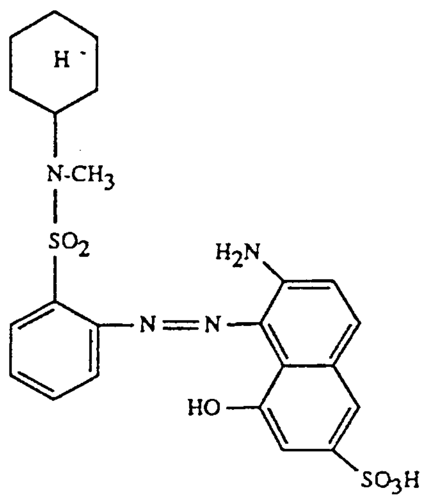

(19) and

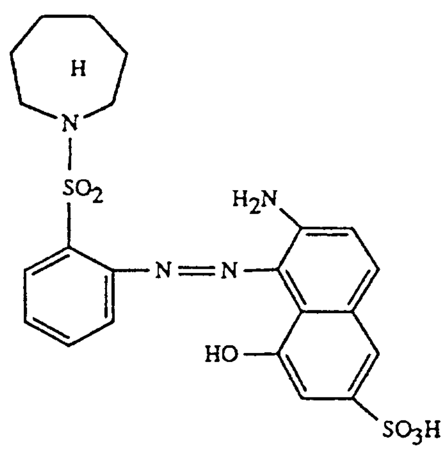

(20)

together with at least one of the blue-dyeing dyes of formulae

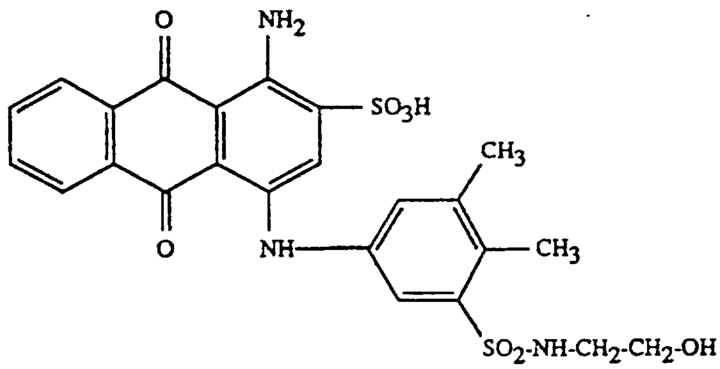

(21),

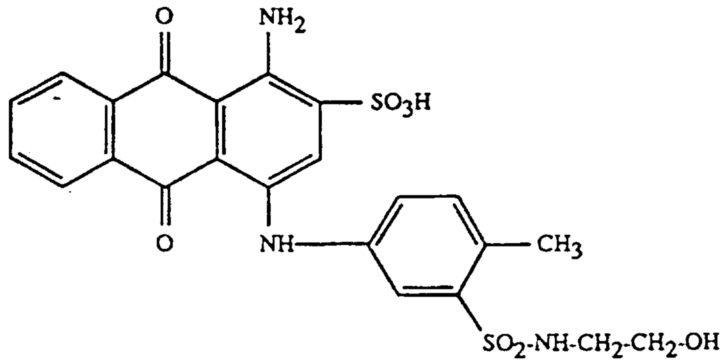

(22),

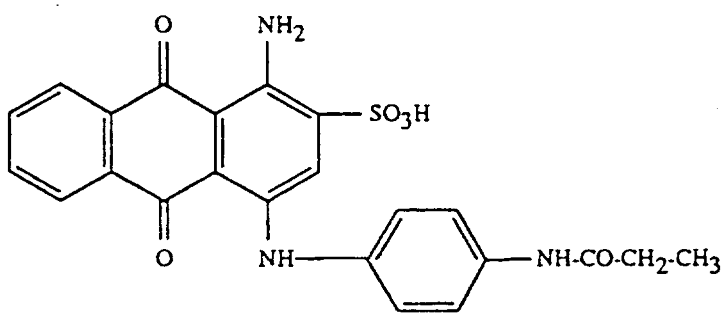

(23),

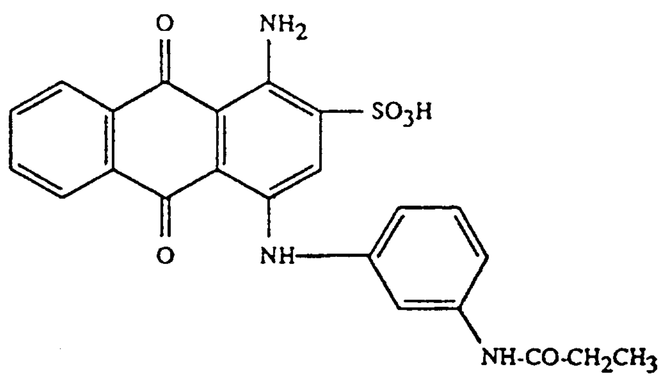

(24) und

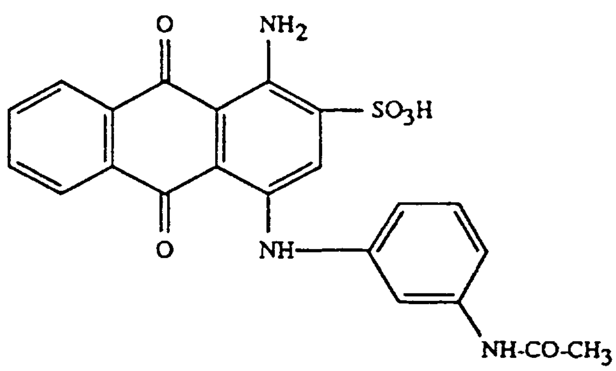

(25).

**11.** Use of an azo dye according to any one of claims 1 to 6 or of an azo dye obtained according to claim 7 for dyeing or printing natural and synthetic polyamide materials.

**12.** Polyamide material, especially polyamide carpets, dyed or printed by the process according to claim 8.

**Claims for the following Contracting State : ES**

1. A process for the preparation of an azo dye of formula

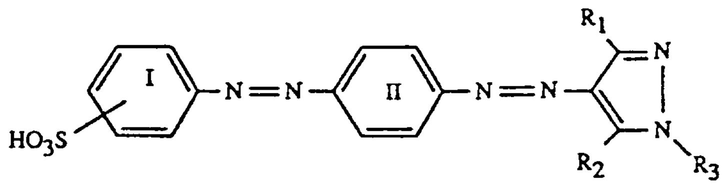

(1),

wherein $R_1$ is hydrogen or $C_1$-$C_4$alkyl, $R_2$ is $C_2$-$C_4$alkyl, $R_3$ is hydrogen, $C_1$-$C_4$alkyl or unsubstituted or substituted $C_5$-$C_7$cycloalkyl or phenyl, and the benzene rings I and II are unsubstituted or substituted, which comprises diazotizing an amine of formula

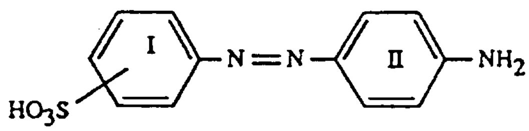

(7)

and coupling the diazotized amine to a coupling component of formula

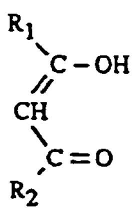

(8)

and reacting the reaction product of formula

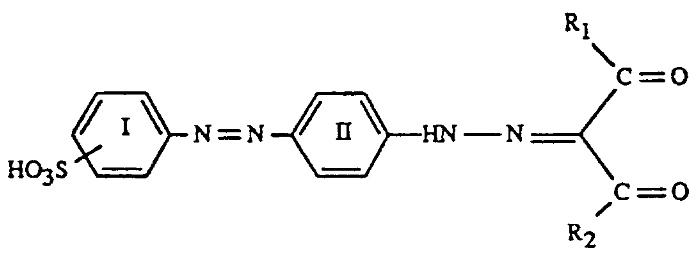

(9)

with a hydrazine of formula

$H_2N$-$NH$-$R_3$ (10)

wherein $R_1$, $R_2$ and $R_3$ are as defined under formula (1) and the benzene rings I and II are unsubstituted or substituted.

2. A process according to claim 1, which comprises using a coupling component of formula (8) wherein $R_1$ is methyl or ethyl.

3. A process according to either claim 1 or claim 2, which comprises using a coupling component of formula (8) wherein $R_2$ is ethyl.

4. A process according to any one of claims 1 to 3, which comprises using a compound of formula (10) wherein $R_3$ is hydrogen.

5. A process according to any one of claims 1 to 4, which comprises using an amine of formula (7) wherein the sulfo group is attached to the benzene ring I in meta- or para-position to the azo group.

6. A process according to claim 1, which comprises diazotizing an amine of formula

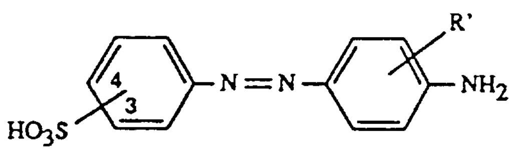

(11),

wherein R' is hydrogen or methoxy, and the sulfo group is attached to the benzene ring in the 3- or 4-position, and coupling the diazotized amine to a coupling component of formula

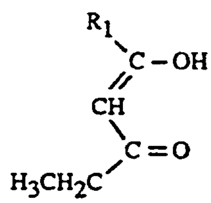

(12)

wherein $R_1$ is methyl or ethyl, and reacting the reaction product with a compound of formula

$H_2N\text{-}NH_2$ (13).

7. A process for the trichromatic dyeing or printing of natural and synthetic polyamide materials with a mixture of dyes, which comprises using at least one yellow- or orange-dyeing dye, prepared according to claim 1, of formula

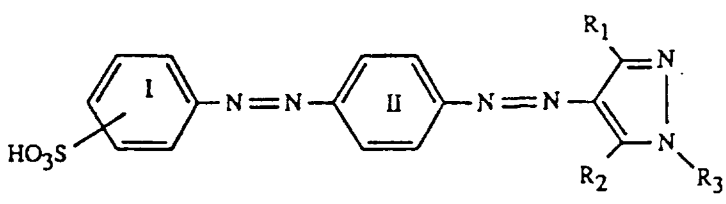

(1),

wherein $R_1$ is hydrogen or $C_1$-$C_4$alkyl, $R_2$ is $C_2$-$C_4$alkyl, $R_3$ is hydrogen, $C_1$-$C_4$alkyl or unsubstituted or substituted $C_5$-$C_7$cycloalkyl or phenyl, and the benzene rings I and II are unsubstituted or substituted, together with at least one red-dyeing dye and at least one blue-dyeing dye.

8. A process according to claim 7 for trichromatic dyeing or printing, which comprises using at least one of the red-dyeing dyes of formulae (14), (15) and (16):

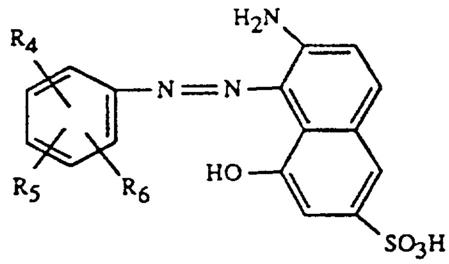

(14),

wherein $R_4$ is unsubstituted or substituted $C_1$-$C_8$alkyl, halogen, phenylsulfonyl or phenoxysulfonyl, each unsubstituted or substituted in the phenyl ring by $C_1$-$C_4$alkyl, or is cyclohexyloxycarbonylamino, $C_2$-$C_4$alkanoylamino, benzoylamino which is unsubstituted or substituted in the phenyl ring by halogen, or is 1-azacycloheptane-N-sulfonyl or

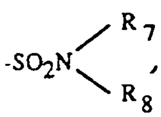

,

wherein $R_7$ is $C_1$-$C_8$alkyl, phenyl or cyclohexyl, or $C_1$-$C_4$alkyl-substituted phenyl or cyclohexyl, and $R_8$ is hydrogen or $C_1$-$C_8$alkyl, $R_5$ is hydrogen, halogen, $C_1$-$C_8$alkyl or $C_2$-$C_4$alkanoylamino, and $R_6$ is hydrogen or halogen,

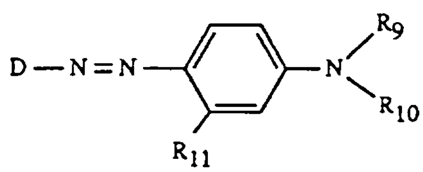

(15),

wherein D is unsubstituted or substituted phenyl, thiophenyl or benzothiazolyl, $R_9$ is $C_1$-$C_8$alkyl, $R_{10}$ is unsubstituted or substituted $C_1$-$C_8$alkyl, and $R_{11}$ is hydrogen or $C_1$-$C_4$alkyl, and

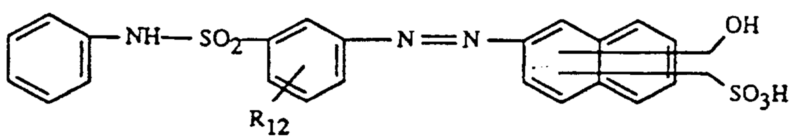

(16),

wherein $R_{12}$ is $C_1$-$C_4$alkyl, together with at least one blue-dyeing dye of formula

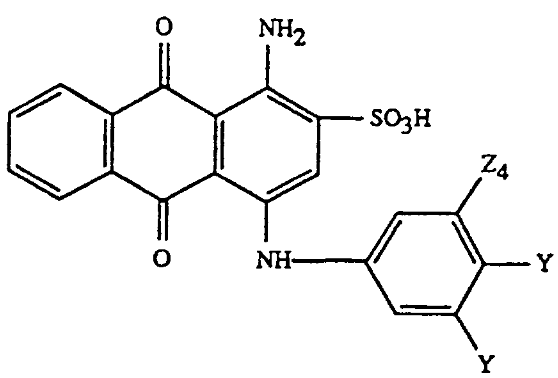

(17),

wherein one Y is hydrogen or methyl and the other Y is $C_{2-4}$alkanoylamino or $C_{2-4}$hydroxyalkylsulfamoyl, and $Z_4$ is hydrogen or methyl.

9. A process according to either claim 7 or claim 8 for trichromatic dyeing or printing, which comprises using at least one of the red-dyeing dyes of formulae

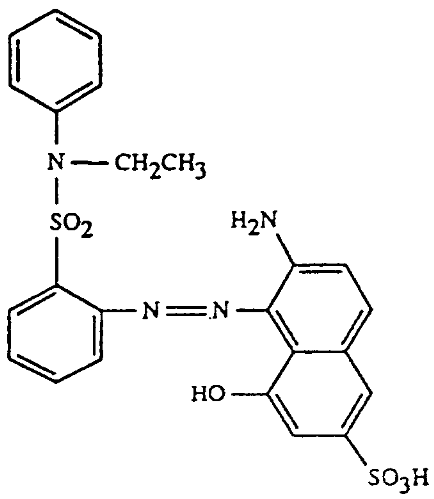

(18),

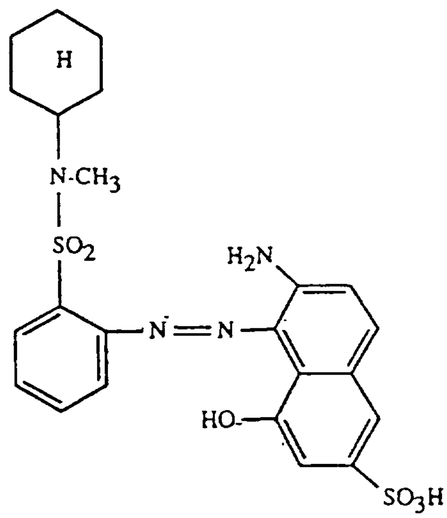

(19) and

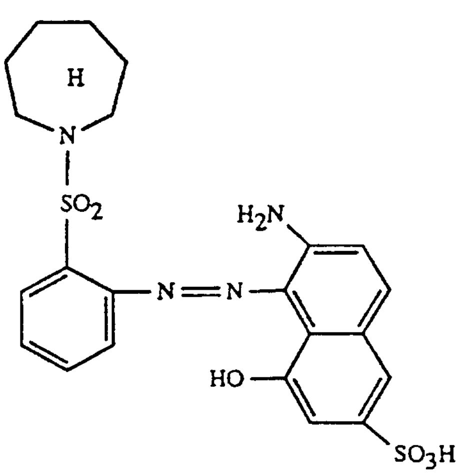

(20)

together with at least one of the blue-dyeing dyes of formulae

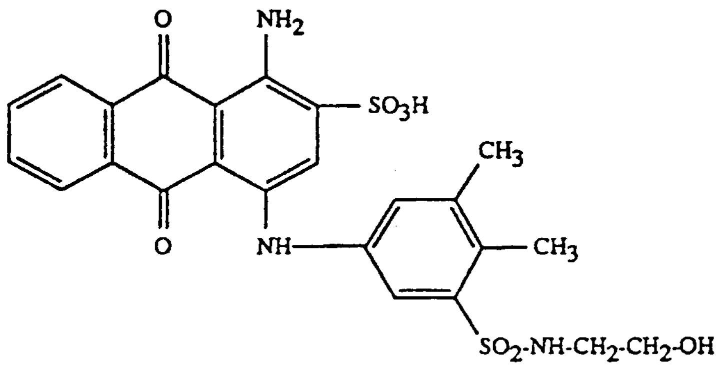

(21);

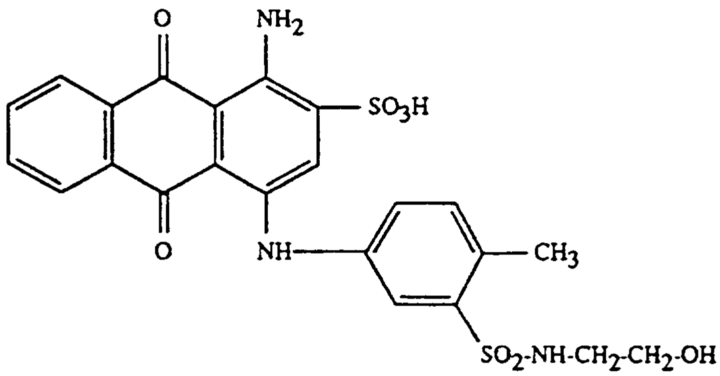

(22),

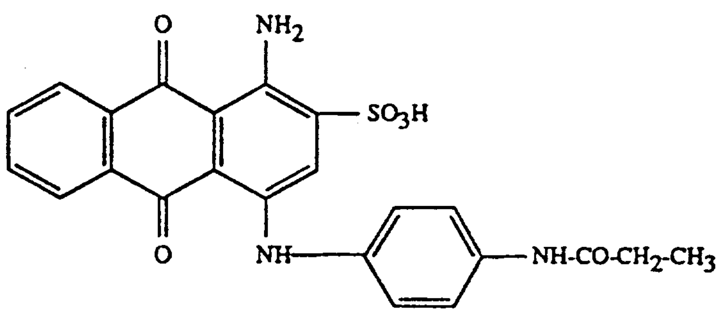

(23),

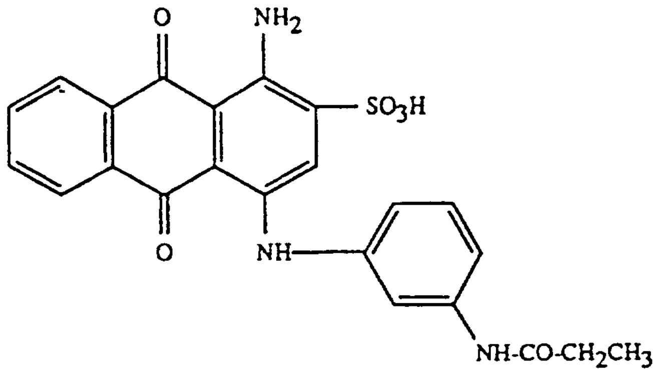

(24) and

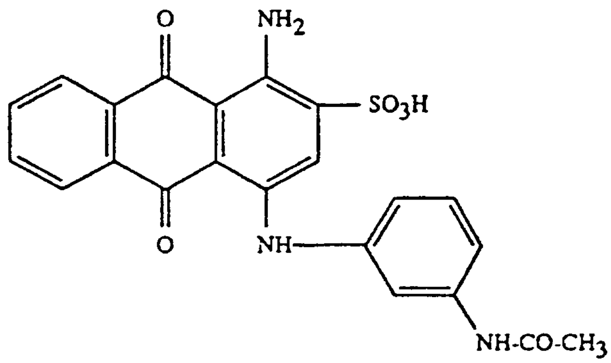

(25)

**10.** Use of an azo dye obtained according to any one of claims 1 to 6 for dyeing or printing natural and synthetic polyamide materials.

**11.** Polyamide material, especially polyamide carpets, dyed or printed by the process according to claim 7.

**Revendications**
**Revendications pour les Etats contractants suivants : BE, CH, DE, FR, GB, IT, LI, NL**

**1.** Colorants azoïques de formule

(1)

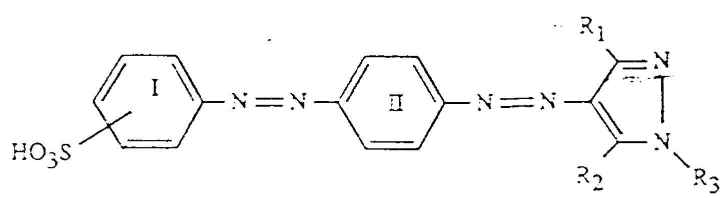

dans laquelle $R_1$ représente un atome d'hydrogène ou un groupe alkyle en $C_{1-4}$, $R_2$ un groupe alkyle en $C_{2-4}$, $R_3$ un atome d'hydrogène, un groupe alkyle en $C_{1-4}$ ou un groupe phényle ou cycloalkyle en $C_{5-7}$ pouvant être substitué, et dans laquelle les noyaux benzéniques I et II peuvent être substitués.

**2.** Colorants azoïques conformes à la revendication 1, caractérisés en ce que $R_1$ représente un groupe méthyle ou éthyle.

**3.** Colorants azoïques conformes à une des revendications 1 et 2, caractérisés en ce que $R_2$ représente un groupe éthyle.

**4.** Colorants azoïques conformes à une des revendications 1 à 3, caractérisés en ce que $R_3$ est un atome d'hydrogène.

**5.** Colorants azoïques conformes à une des revendications 1 à 4, caractérisés en ce que le groupe sulfo du noyau benzénique I est en position méta ou para par rapport au groupe azo.

**6.** Colorants azoïques conformes à la revendication 1 de formule

(3) 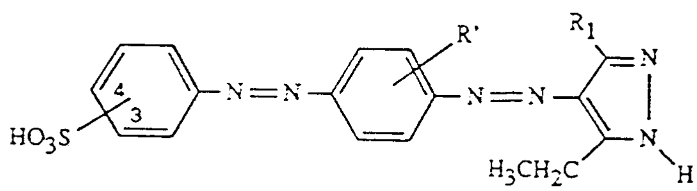

dans lesquels $R_1$ représente un groupe méthyle ou éthyle et R' représente un atome d'hydrogène ou un groupe méthoxy et le groupe sulfo est en position 3 ou 4 du noyau benzénique.

**7.** Procédé pour la préparation de colorants azoïques conformes à la revendication 1, caractérisé en ce que l'on procède à la diazotation d'une amine de formule

(7) 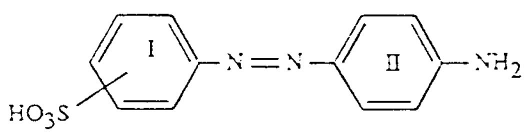

en ce que l'on copule le produit diazoté avec un copulant de formule

(8) 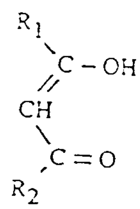

et en ce que l'on fait réagir ensuite le produit de la réaction de formule

(9) 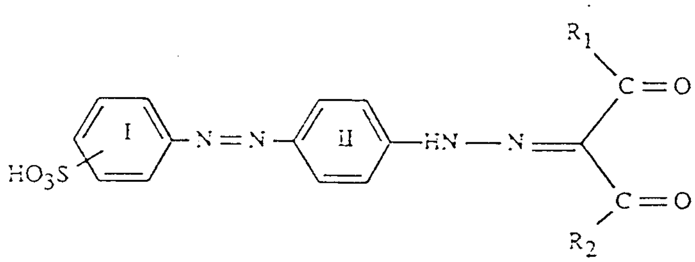

avec une hydrazine de formule

(10) $H_2N\text{-}NH\text{-}R_3$

$R_1$, $R_2$ et $R_3$ ayant les significations indiquées dans la revendication 1 et les noyaux benzéniques I et II pouvant être substitués.

**8.** Procédé de teinture ou d'impression en trichromie de matériaux en polyamide naturel ou synthétique avec des mélanges de colorants, caractérisé en ce que l'on utilise au moins un colorant jaune ou

orange de formule

(1) 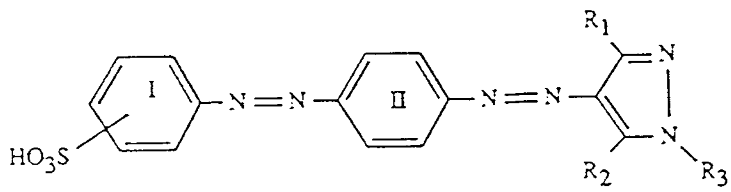

dans laquelle $R_1$ représente un atome d'hydrogène ou un groupe alkyle en $C_{1-4}$, $R_2$ un groupe alkyle en $C_{2-4}$, $R_3$ un atome d'hydrogène, un groupe alkyle en $C_{1-4}$ ou un groupe phényle ou cycloalkyle en $C_{5-7}$ pouvant être substitué, et dans laquelle les noyaux benzéniques I et II peuvent être substitués, ensemble avec au moins un colorant rouge et au moins un colorant bleu.

**9.** Procédé conforme à la revendication 8 pour la teinture ou l'impression en trichromie, caractérisé en ce que l'on utilise au moins un colorant rouge de formule (14), (15) et (16)

(14) 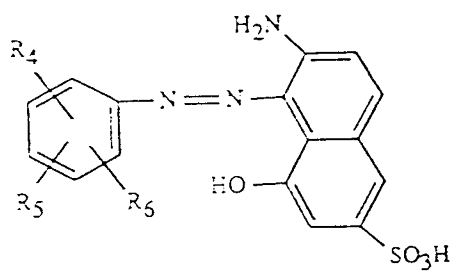

dans laquelle $R_4$ représente un groupe alkyle en $C_{1-8}$ pouvant être substitué, un atome d'halogène, un groupe phénoxysulfonyle ou phénylsulfonyle dont le noyau phényle peut être substitué par un groupe alkyle en $C_{1-4}$, un groupe cyclohexyloxycarbonylamino, alcanoylamino en $C_{2-4}$, un groupe benzoylamino dont le noyau phényle peut être substitué par un atome d'halogène, un groupe 1-azacycloheptane-N-sulfonyle ou un groupe

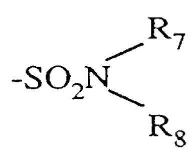

où $R_7$ représente un groupe alkyle en $C_1$-$C_8$ ou un groupe phényle ou cyclohexyle pouvant être substitué par un groupe alkyle en $C_1$-$C_4$, et $R_8$ représente un atome d'hydrogène ou un groupe alkyle en $C_{1-8}$, $R_5$ représente un atome d'hydrogène, d'halogène, un groupe alkyle en $C_1$-$C_8$ ou alcanoylamino en $C_{2-4}$ et $R_6$ représente un atome d'hydrogène ou d'halogène,

(15) 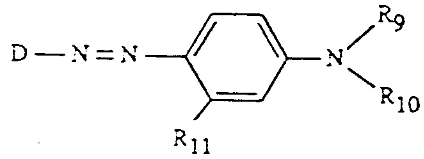

dans laquelle D représente un groupe benzothiazolyle, thiophényle ou phényle pouvant être substitué, $R_9$ représente un groupe alkyle en $C_{1-8}$, $R_{10}$ représente un groupe alkyle en $C_{1-8}$ pouvant être substitué et $R_{11}$ un atome d'hydrogène ou un groupe alkyle en $C_{1-4}$, et

(16) 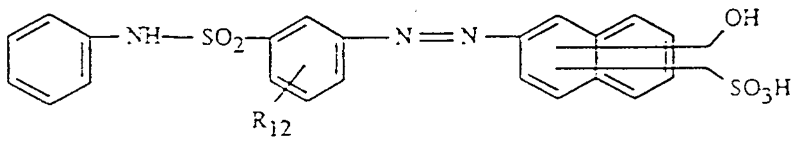

dans laquelle $R_{12}$ représente un groupe alkyle en $C_{1-4}$, ensemble avec un colorant bleu de formule

(17) 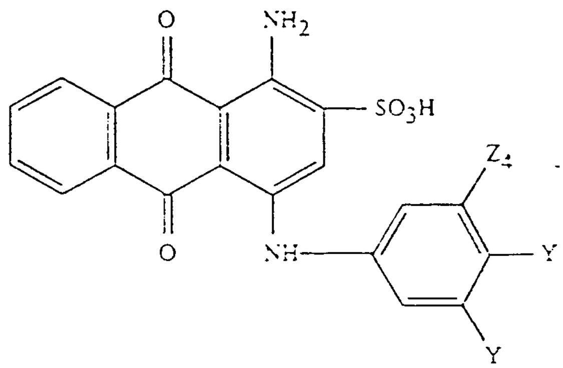

dans laquelle un des Y représente un atome d'hydrogène ou un groupe méthyle et l'autre Y représente un groupe alcanoylamino en $C_{2-4}$ ou hydroxyalkylsulfamoyle en $C_{2-4}$ et $Z_4$ représente un atome d'hydrogène ou un groupe méthyle.

**10.** Procédé conforme à une des revendications 8 et 9 pour la teinture ou l'impression en trichromie, caractérisé en ce que l'on utilise au moins un des colorants rouges de formule

(18) 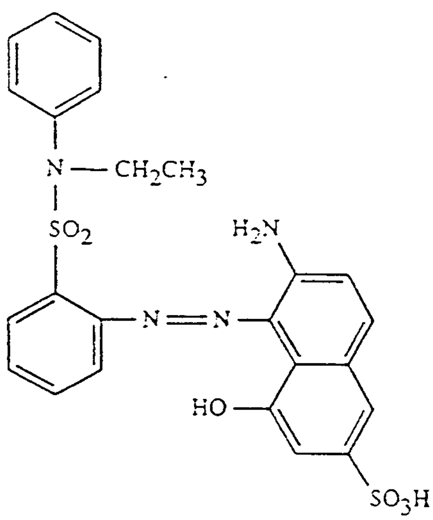

(19)

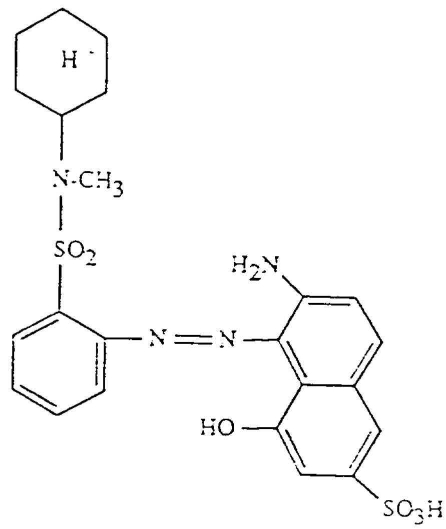

(20)

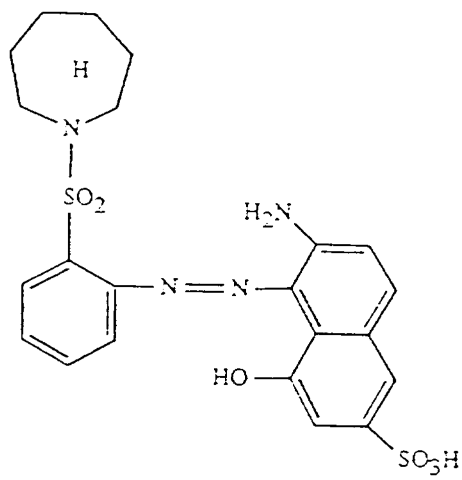

avec au moins un des colorants bleus de formule

(21)

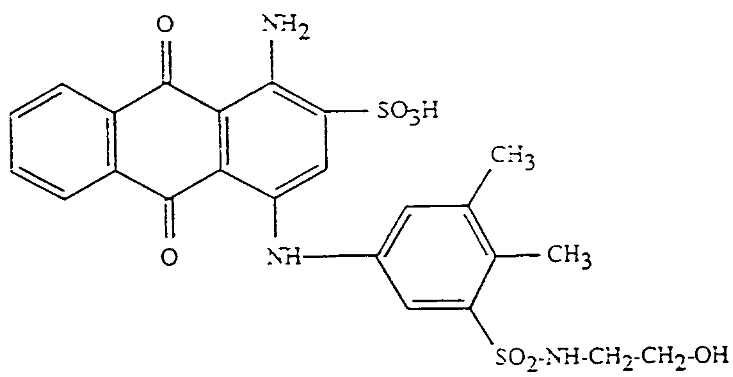

(22)

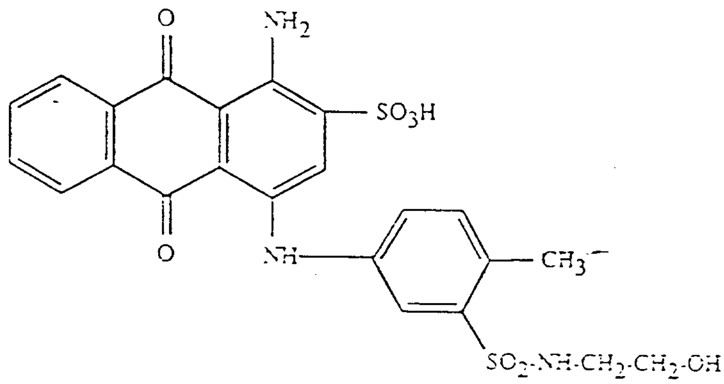

(23)

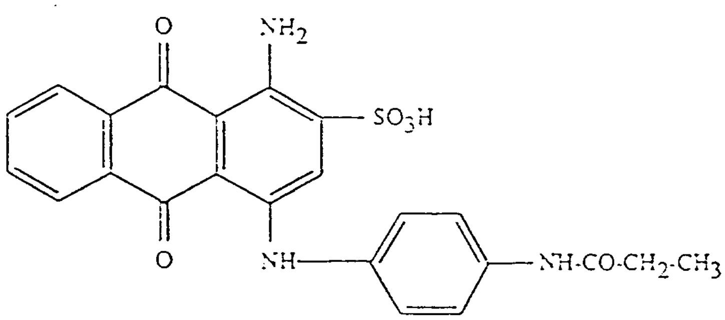

(24)

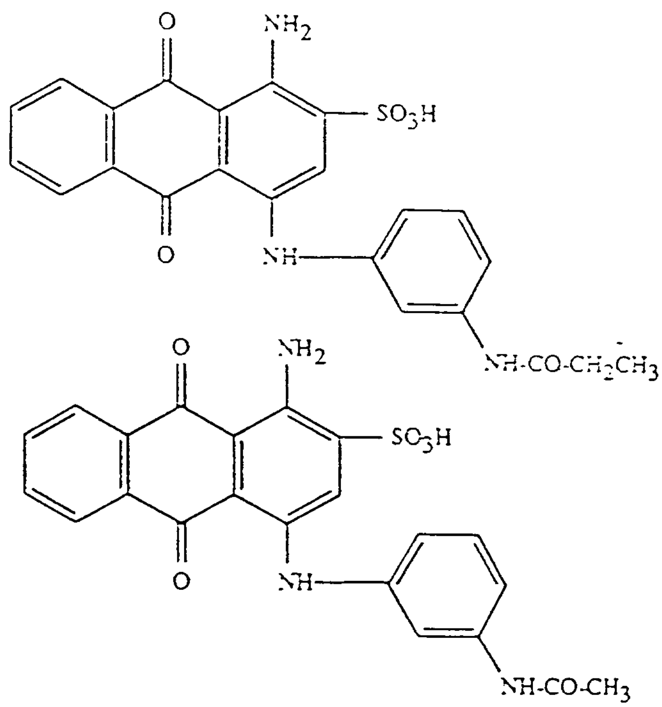

(25)

**11.** Utilisation des colorants azoïques conformes à une des revendications 1 à 6 ou obtenus conformément à la revendication 7 pour la teinture ou l'impression de matériaux en polyamide synthétique ou naturel.

**12.** Matériau en polyamide, en particulier des tapis en polyamide, teints ou imprimés selon le procédé conforme à la revendication 8.

**Revendications pour l'Etat contractant suivant : ES**

1. Procédé de préparation de colorants azoïques de formule

(1) 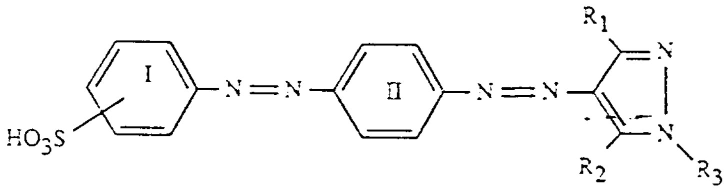

dans laquelle $R_1$ représente un atome d'hydrogène ou un groupe alkyle en $C_{1-4}$, $R_2$ un groupe alkyle en $C_{2-4}$, $R_3$ un atome d'hydrogène, un groupe alkyle en $C_{1-4}$ ou un groupe phényle ou cycloalkyle en $C_{5-7}$ pouvant être substitué, et dans laquelle les noyaux benzéniques I et II peuvent être substitués, caractérisé en ce que l'on effectue la diazotation d'une amine de formule

(7) 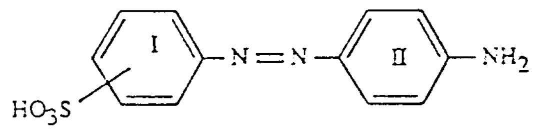

en ce que l'on copule le produit diazoté avec un copulant de formule

(8) 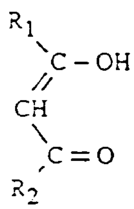

et en ce que l'on fait réagir ensuite le produit de la réaction de formule

(9) 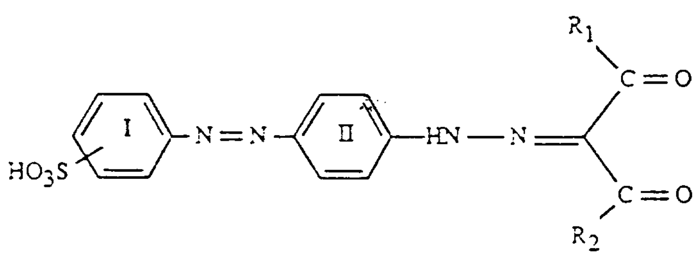

avec une hydrazine de formule

(10) $H_2N\text{-}NH\text{-}R_3$

$R_1$, $R_2$ et $R_3$ ayant les significations indiquées pour la formule (1) et les noyaux benzéniques I et II pouvant être substitués.

2. Procédé conforme à la revendication 1, caractérisé en ce que l'on utilise un copulant de formule (8) dans laquelle $R_1$ représente un groupe méthyle ou éthyle.

3. Procédé conforme à une des revendications 1 et 2, caractérisé en ce que l'on utilise un copulant de formule (8) dans laquelle $R_2$ représente un groupe éthyle.

4. Procédé conforme à une des revendications 1 à 3, caractérisé en ce que l'on utilise un composé de formule (10) dans laquelle $R_3$ est un atome d'hydrogène.

5. Procédé conforme à une des revendications 1 à 4, caractérisé en ce que l'on utilise une amine de formule (7) dans laquelle le groupe sulfo du noyau benzénique I est en position méta ou para par rapport au groupe azo.

6. Procédé conforme à la revendication 1, caractérisé en ce que l'on procède à la diazotation d'une amine de formule

(11) 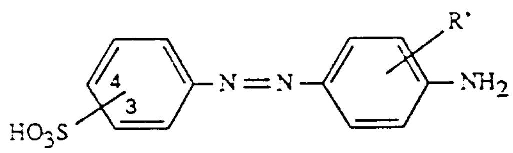

dans laquelle R' représente un atome d'hydrogène ou un groupe méthoxy et dans laquelle le groupe sulfo se trouve en position 3 ou 4 du noyau benzénique, et que l'on fait copuler celle-ci avec un copulant de formule

(12) 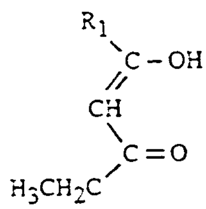

dans laquelle $R_1$ représente un groupe méthyle ou éthyle et en ce que l'on fait réagir le produit de cette réaction avec un composé de formule

(13) $H_2N\text{-}NH_2$.

7. Procédé de teinture ou d'impression en trichromie de matériaux en polyamide naturel ou synthétique avec des mélanges de colorants, caractérisé en ce que l'on utilise au moins un colorant jaune ou orange de formule préparé conformément à la revendication 1

(1) 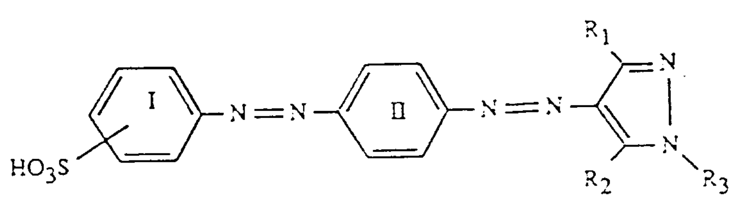

dans laquelle $R_1$ représente un atome d'hydrogène ou un groupe alkyle en $C_{1-4}$, $R_2$ un groupe alkyle en $C_{2-4}$, $R_3$ un atome d'hydrogène, un groupe alkyle en $C_{1-4}$ ou un groupe phényle ou cycloalkyle en $C_{5-7}$ pouvant être substitué, et dans laquelle les noyaux benzéniques I et II peuvent être substitués, ensemble avec au moins un colorant rouge et au moins un colorant bleu.

8. Procédé conforme à la revendication 7 pour la teinture ou l'impression en trichromie, caractérisé en ce que l'on utilise au moins un colorant rouge de formule (14), (15) et (16)

(14) 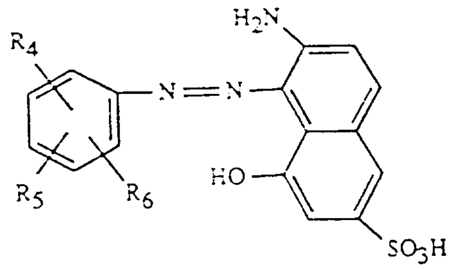

dans laquelle $R_4$ représente un groupe alkyle en $C_{1-8}$ pouvant être substitué, un atome d'halogène, un groupe phénoxysulfonyle ou phénylsulfonyle dont le noyau phényle peut être substitué par un groupe alkyle en $C_{1-4}$, un groupe cyclohexyloxycarbonylamino, alcanoylamino en $C_{2-4}$, un groupe benzoylamino dont le noyau phényle peut être substitué par un atome d'halogène, un groupe 1-azacycloheptane-N-sulfonyle ou un groupe

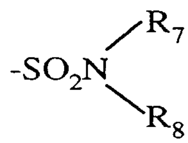

où $R_7$ représente un groupe alkyle en $C_1$-$C_8$ ou un groupe phényle ou cyclohexyle pouvant être substitué par un groupe alkyle en $C_1$-$C_4$, et $R_8$ représente un atome d'hydrogène ou un groupe alkyle en $C_{1-8}$, $R_5$ représente un atome d'hydrogène, d'halogène, un groupe alkyle en $C_1$-$C_8$ ou alcanoylamino en $C_{2-4}$ et $R_6$ représente un atome d'hydrogène ou d'halogène,

(15) 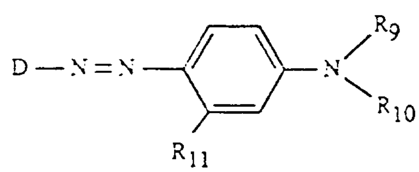

dans laquelle D représente un groupe benzothiazolyle, thiophényle ou phényle pouvant être substitué, $R_9$ représente un groupe alkyle en $C_{1-8}$, $R_{10}$ représente un groupe alkyle en $C_{1-8}$ pouvant être substitué et $R_{11}$ un atome d'hydrogène ou un groupe alkyle en $C_{1-4}$, et

(16) 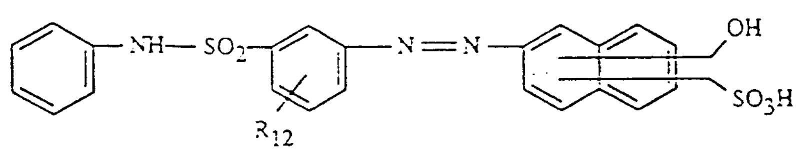

dans laquelle $R_{12}$ représente un groupe alkyle en $C_{1-4}$, ensemble avec un colorant bleu de formule

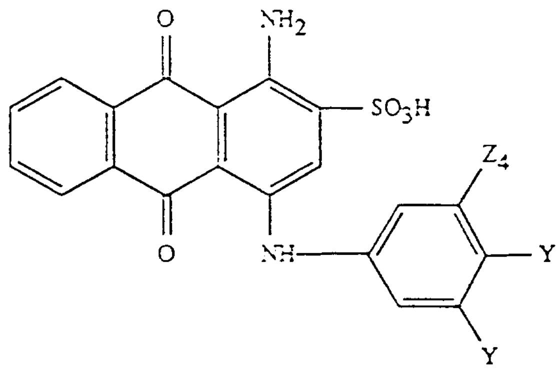

(17)

dans laquelle un des Y représente un atome d'hydrogène ou un groupe méthyle et l'autre Y représente un groupe alcanoylamino en $C_{2-4}$ ou hydroxyalkylsulfamoyle en $C_{2-4}$ et $Z_4$ représente un atome d'hydrogène ou un groupe méthyle.

**9.** Procédé conforme à une des revendications 7 et 8 pour la teinture ou l'impression en trichromie, caractérisé en ce que l'on utilise au moins un des colorants rouges de formule

(18) 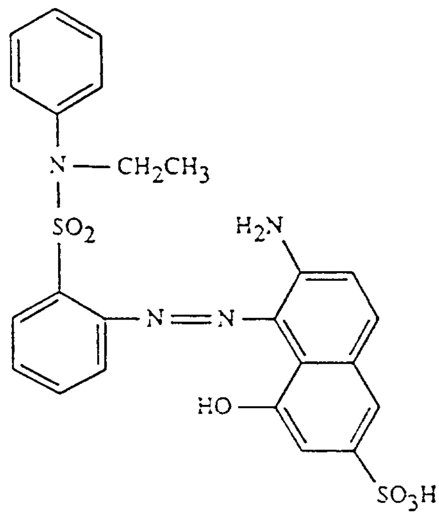

(19) 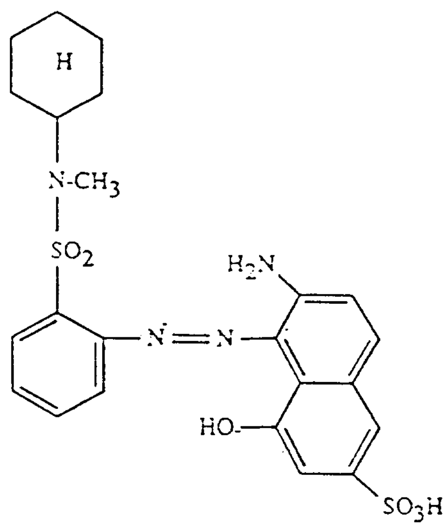

(20) 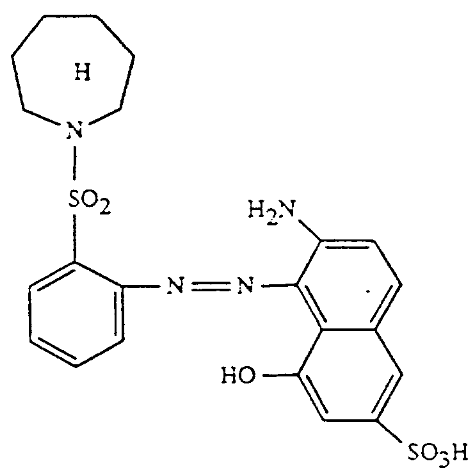

avec au moins un colorant bleu de formule

(21)

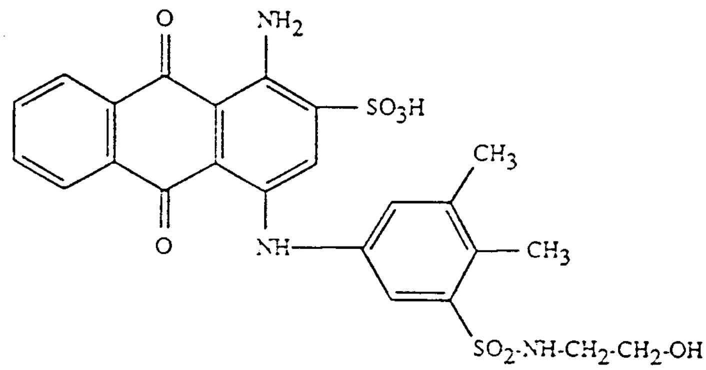

(22)

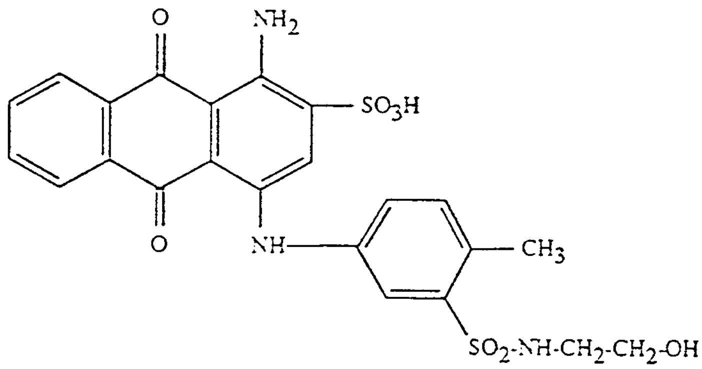

(23)

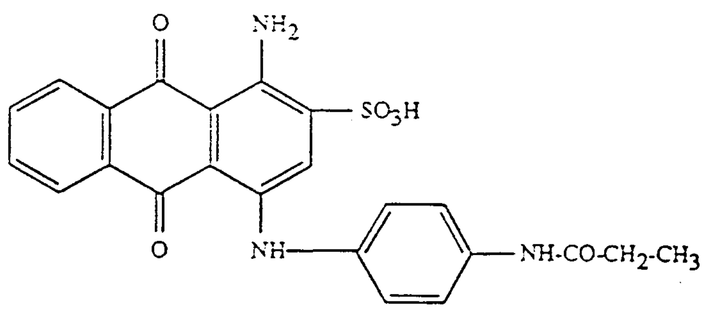

(24)

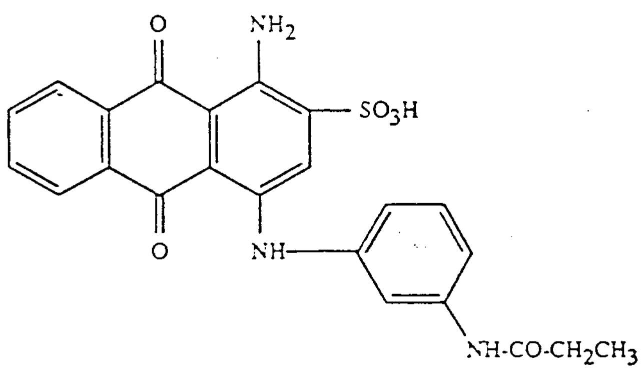

(25) 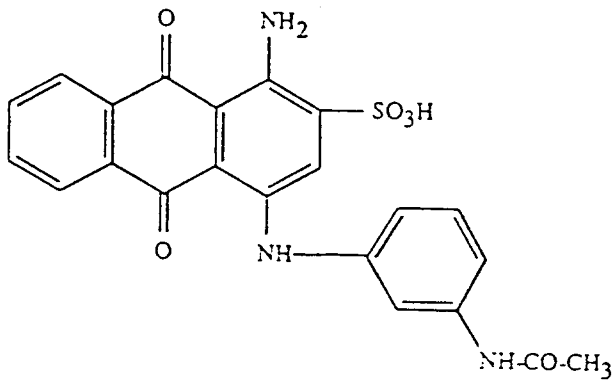

**10.** Utilisation des colorants azoïques obtenus conformément aux revendications 1 à 6 pour la teinture ou l'impression de matériaux en polyamide naturel ou synthétique.

**11.** Matériaux en polyamide, en particulier tapis en polyamide, teints ou imprimés selon le procédé conforme à la revendication 7.